# EUROPÄISCHE PATENTSCHRIFT

(11) **EP 1 677 185 B1**
(45) Veröffentlichungstag und Bekanntmachung des Hinweises auf die Patenterteilung: **04.11.2009**
(21) Anmeldenummer: 06006027.4
(22) Anmeldetag: 23.09.2003
(51) Int. Cl.: G06F 7/50, G06F 7/72

(54) **Vorrichtung und Verfahren zum Umsetzen und Addiererschaltung**
Device and method for conversion and accomplishing an addition circuit
Dispositif et procédé destinés à la conversion et circuit additionneur

(30) Priorität: 25.09.2002 DE 10244738
(43) Veröffentlichungstag der Anmeldung: 05.07.2006
(62) Teilanmeldung aus: 03750611.0
(73) Patentinhaber: Infineon Technologies AG, 81669 München (DE)
(72) Erfinder: Elbe, Astrid, 81243 München (DE); Janssen, Norbert, 81667 München (DE); Sedlak, Holger, 82054 Lochhofen (DE)
(74) Vertreter: Zinkler, Franz

(56) Entgegenhaltungen:
- DE-A- 3 631 992
- GB-A- 2 254 743
- FU-CHIANG CHENG ET AL: "Delay-insensitive carry-lookahead adders" VLSI DESIGN, 1997. PROCEEDINGS., TENTH INTERNATIONAL CONFERENCE ON HYDERABAD, INDIA 4-7 JAN. 1997, LOS ALAMITOS, CA, USA,IEEE COMPUT. SOC, US, 4. Januar 1997 (1997-01-04), Seiten 322-328, XP010211531 ISBN: 0-8186-7755-4
- NEIL H. E. WESTE, KAMRAN ESHRAGHIAN: "Principles of CMOS VLSI Design" 1985, ADDISON-WESLEY , UNITED STATES OF AMERICA , XP002035817 * Seite 160 - Seite 173 *
- RUIZ G A ET AL: "Compact 32-bit CMOS adder in multiple-output DCVS logic for self-timed circuits" IEE PROCEEDINGS: CIRCUITS DEVICES AND SYSTEMS, INSTITUTION OF ELECTRICAL ENGINEERS, STENVENAGE, GB, Bd. 147, Nr. 3, 8. Juni 2000 (2000-06-08), Seiten 183-188, XP006013854 ISSN: 1350-2409
- RUIZ G.A.: 'Compact four bit carry look ahead CMOS adder in multi-output DVCS logic' ELECTRONIC LETTERS Bd. 32, Nr. 17, 15 August 1996, Seiten 1556 - 1557, XP006005592

## Beschreibung

Die vorliegende Erfindung bezieht sich auf sichere Addiererschaltungen und insbesondere auf eine Vorrichtung und ein Verfahren zum Umsetzen einer Dual-Rail-Eingabe in eine One-Hot-Ausgabe.

Die DE 3631992 C2 offenbart einen Kryptographieprozessor zum Durchführen des RSA-Public-Key-Kryptosystems. Hierbei wird eine modulare Exponentiation mit einer Basis, einem Exponenten und einem Modul in eine Vielzahl von Drei-Operanden-Additionen zerlegt. Die drei Operanden umfassen einen Moduloperanden N, einen Multiplikanden-Operanden C und einen Zwischenergebnis-Operanden Z. Durch entsprechende Verschiebung/Gewichtung der drei Operanden vor der Addition kann eine durch einen Multiplikations-Look-Ahead-Algorithmus und einen Reduktions-Look-Ahead-Algorithmus beschleunigte Multiplikation/Reduktion durchgeführt werden.

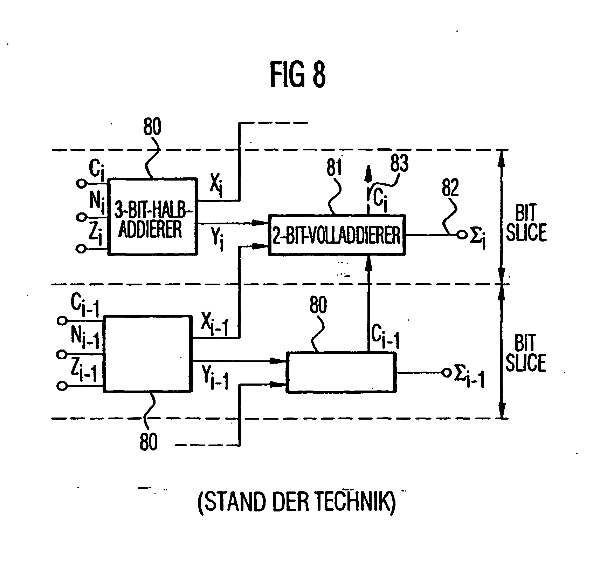

Fig. 8 zeigt einen Ausschnitt aus dem Addierwerk, das gewissermaßen das Herz des Kryptographieprozessors darstellt, der in der DE 3631992 C2 dargestellt ist. Im einzelnen zeigt Fig. 8 zwei aufeinanderfolgende Bit-Slices, um die zwei Summenbits i-1 und i zu berechnen, und zwar aus den drei Eingangsoperandenbits Cᵢ, Nᵢ, Zi bzw. Cᵢ₋₁, Nᵢ₋₁, Zᵢ₋₁ bzw. aus Cᵢ₋₂, Nᵢ₋₂ und Zᵢ₋₂.

Die Drei-Operanden-Addition von C, N, Z wird, auf Bitebene betrachtet, in eine zweistufige Operation zerlegt. Zur Ausführung der ersten Stufe der Operation ist ein Drei-Bit-Halbaddierer 80 vorgesehen, wobei jedem Drei-Bit-Halbaddierer 80 ein Zwei-Bit-Volladdierer 81 nachgeschaltet ist. Der Drei-Bit-Halbaddierer liefert zwei Ausgangsbits xᵢ, yᵢ, wobei die Ausgangsbits xᵢ, yᵢ in die nachgeschalteten Zwei-Bit-Volladdierer so eingespeist werden, wie es in Fig. 8 dargestellt ist. Im einzelnen wird in jedem Zwei-Bit-Volladdierer eines Bit-Slices das niederwertige Bit yᵢ am Ausgang des Drei-Bit-Halbaddierers mit dem hochwertigen Bit der um eine Ordnung niedrigeren Drei-Bit-Halbaddiererstufe (xᵢ₋₁) in dem Zwei-Bit-Volladdierer 81 kombiniert, um ein Summenbit 82 sowie ein Übertragbit 83 zu berechnen. Die Drei-Operanden-Addition wird also in zwei Abschnitte unterteilt. Im ersten Abschnitt wird an jeder binären Stelle eine Summe der drei Bits der Operanden gebildet. Die Summe kann die Werte von 0 bis 3 (in Dezimaldarstellung) annehmen. Die Summe ist also binär mit den zwei Bits x, y darstellbar. Da die Summe an jeder Stelle gebildet wird, können aus den zwei Summenbits zwei neue Zahlen zusammengestellt werden.

Im zweiten Abschnitt werden die beiden Zahlen auf übliche Art und Weise durch den Zwei-Bit-Volladdierer 81 addiert. Die Verschaltung, derart, daß ein Zwei-Bit-Volladdierer immer zwei Ausgangsbits von zwei unterschiedlichen Drei-Bit-Halbaddierern als Eingabe erhält, führt zu einer Verlängerung des Rechenwerks um ein Bit.

Der in Fig. 8 gezeigte Drei-Operanden-Addierer ist dahingehend problematisch, daß weder eine Sicherung der Eingangsoperanden C, N, Z noch eine Sicherung der "Zwischenoperanden" x, y vorgesehen ist. Dies ist dahingehend problematisch, daß besonders in dem normalen Fall, in dem alle Schaltungen in CMOS-Logik ausgeführt sind, das Umschalten eines Bits von 0 auf 1 bzw. von 1 auf 0 zu einem Stromimpuls führt, der beginnt, wenn ein Bit-Zustand umgeschaltet wird. Bekanntlich verbrauchen CMOS-Schaltungen im statischen Zustand keinen Strom. Im Umschaltzustand haben sie jedoch einen Stromverbrauch. Dieser Stromverbrauch ist durch eine Leistungsanalyse eruierbar. Damit ist es grundsätzlich möglich, Informationen über C, N, Z abzuleiten, um beispielsweise auf den geheimen Schlüssel Rückschlüsse zu ziehen, der in einer RSA-Operation verwendet wird.

Ein Angreifer könnte beispielsweise durch Aufnahme des Stromprofils ermitteln, ob eine Umschaltung von 0 auf 1 oder von 1 auf 0 stattgefunden hat. Bei einer ungesicherten Schaltung würde immer dann eine Umschaltung eines Bits auftreten, wenn im Stromprofil eine Stromspitze erkennbar ist. Ein Angreifer kann daher das gesamte Umschaltverhalten eines Rechenwerks anhand des Stromprofils nachvollziehen. Der Angreifer bräuchte dann lediglich noch ein einziges Bit in einer ganzen Sequenz, um daraus rekonstruieren zu können, ob die Umschaltung von einer "1" auf eine "0" oder umgekehrt stattgefunden hat.

Bestimmte CMOS-Schaltungen haben ferner die Eigenschaft, daß die Umschaltung von 0 auf 1 einen anderen Stromverbrauch mit sich zieht als die Umschaltung von 1 auf 0. In diesem Fall sieht ein Angreifer durch einen Vergleich von zwei unterschiedlichen Stromspitzen unmittelbar, welche Bits im Rechenwerk verarbeitet worden sind.

Als Abwehrmaßnahme gegen solche Leistungsanalyseangriffe wurde vorgeschlagen, eine sogenannte Dual-Rail-Technik einzusetzen. Bei der Dual-Rail-Technik wird prinzipiell betrachtet jeder Signalweg doppelt ausgeführt. Auf dem ersten Signalweg wird beispielsweise ein Signal x normal verarbeitet. Auf dem zweiten, in demselben Chip integrierten, Signalweg wird nicht das Signal x verarbeitet, sondern das komplementäre Signal x̅. Dies führt dazu, daß immer dann, wenn in der Signalleitung ein Übergang von beispielsweise 0 auf 1 stattfindet, in der anderen Leitung, also der zweiten "Rail", ein komplementärer Übergang stattfindet. Für jeden Bitübergang finden daher auf beiden Leitungen immer beide Übergänge statt. Dies führt dazu, daß für Schaltungen, bei denen Übergänge von 0 auf 1 und 1 auf 0 unterschiedlich viel Strom brauchen, nicht mehr eruierbar ist, ob ein Übergang von 0 auf 1 oder von 1 auf 0 stattgefunden hat. Dies liegt daran, daß das Stromprofil für jeden Schaltungsübergang eine Spitze enthält, die die Überlagerung des Stromverbrauchs der beiden Rails ist. Die Dual-Rail-Technik liefert eine hohe Sicherheit, jedoch mit dem Nachteil, daß alle Schaltungen normalerweise doppelt ausgeführt werden müssen und daß der Leistungsverbrauch der gesamten Schaltung ebenfalls doppelt so hoch ist. Dafür ist die Schaltung jedoch bereits in gewissem Umfang gegenüber Leistungsanalyseattacken immun.

Wird lediglich eine Dual-Rail-Technik eingesetzt, so ist anhand des Stromprofils immer noch zu erkennen, ob ein bestimmtes Bit von 0 auf 1 bzw. von 1 auf 0 übergegangen ist oder im Vergleich zum vorigen Taktzyklus gleichgeblieben ist. Im Falle eines Bitübergangs ist nämlich eine Leistungsspitze ersichtlich. Die Leistungsspitze ist jedoch nicht ersichtlich, wenn ein Bit von einem Zyklus zum nächsten beispielsweise auf 1 oder auf 0 geblieben ist, sich also nicht verändert hat. Zur Abwehr von Angriffen, die auf diesem Effekt basieren, wurde vorgeschlagen, die Dual-Rail-Technik um einen Precharge/Predischarge-Modus zu ergänzen. Die Schaltung wird abwechselnd in einem Datenmodus und einem Vorbereitungsmodus (Precharge/Predischarge) betrieben. Jedem Datenzyklus geht ein Vorbereitungszyklus voraus, in dem im Falle von Precharge beide Rails, also beispielsweise x und x̅ auf "1" vorgeladen werden, um dann, in dem Datenmodus, zu verarbeitende komplementäre Eingangssignale in die beiden Rails zu speisen. Dies führt dazu, daß immer, von einem Datenzyklus zu einem Vorbereitungszyklus oder von einem Vorbereitungszyklus zu einem Datenzyklus, genau die gleiche Anzahl von Übergängen stattfindet. Ist der Vorbereitungsmodus als Predischarge-Modus ausgeführt, so werden im Vorbereitungsmodus alle Eingangsdaten nicht, wie im Precharge, auf 1 initialisiert, sondern auf 0 "vorentladen". Dann findet ebenfalls von einem Vorbereitungszyklus zu einem Datenzyklus und umgekehrt genau dieselbe Anzahl von Übergängen statt.

Wie es bereits ausgeführt worden ist, wird für die Ausführung von modularen Operationen, wie z. B. Addition oder Multiplikation, beispielsweise im Rahmen kryptographischer Algorithmen, wie RSA oder elliptische Kurven, ein Drei-Operanden-Addierer benötigt. Diese Operationen müssen aus den verschiedenen Gründen vom Addierwerk sicher gegenüber Power-Attacken ausgeführt werden. Da kryptographische Berechnungen äußerst rechenaufwendig sind, muß das Addierwerk eine hohe Leistung haben. Da insbesondere in der Kryptographie lange Operanden verarbeitet werden müssen, wobei die Operandenlänge bei elliptischen Kurven im Bereich zwischen 100 und 200 Bits liegt und im Bereich von RSA zwischen 1.024 und 2.048 Bits liegt, hat das Rechenwerk selbst eine große Bitlänge, um die an das Rechenwerk gestellten Anforderungen nach Schnelligkeit zu erreichen. Infolge dieser großen Bitlänge ist es aber aus wirtschaftlicher Sicht - die wesentlichen Kosten stecken üblicherweise in der Chipfläche - zwingend notwendig, das Rechenwerk sehr flächensparend zu entwerfen. Es wird also ein Rechenwerk benötigt, das gleichzeitig eine hohe Schnelligkeit hat, das darüber hinaus sicher ist, und das zusätzlich flächenminimal ist.

Wie es bereits ausgeführt worden ist, hat der Drei-Operanden-Addierer, der in der DE 3631992 C2 offenbart ist, keine Sicherheit gegenüber Hardware-Attacken. Eine komplette Auslegung sowohl des Drei-Bit-Halbaddierers und des Zwei-Bit-Volladdierers in Dual-Rail mit Precharge würde zwar eine hohe Sicherheit liefern, ist jedoch aufgrund der Flächenanforderungen immens.

Die Fachveröffentlichung mit dem Titel "Delay-Insensitive Carry-Lookahead Adders", VLSI Design, 1997, Proceedings, 10th International Conference on Hyderabad, India, Jan. 4-7,1997, Los Alamitos, CA; USA, IEEE, Comput. Soc, US, 4. Januar 1997, Seiten 322-328, ISBN: 0-8186-7755-4 von Fu-Chiung u.a., offenbart Delay-insensitive Carry-Lookahead-Addierer. Insbesondere wird zwischen synchronen Schaltungen und asynchronen Schaltungen unterschieden, wobei synchrone Schaltungen einen Takt haben, um die Operationen von Untersystemen zu synchronisieren, während dies bei asynchronen Schaltungen nicht der Fall ist. Delay-insensitive Schaltungen sind eine Unterklasse von asynchronen Schaltungen. Ein Delay-insensitiver Carry-Lookahead-Addierer wird unter Verwendung einer Dual-Rail-Signalisierung für die Eingangsbits, Summenbits und Übertragbits implementiert, wobei ein One-Hot-Code in den internen Signalen verwendet wird. Die internen Signale sind ein Carry-Kill-Signal, ein Carry-Generate-Signal und ein Carry-Propagate-Signal. Ein C-Modul berechnet die Carry-Signale und die Summensignale, während ein D-Modul Block-Carry-Signale und Block-Übertrag-Signale berechnet.

Das Fachbuch "Principles of CMOS VLSI Design", 1985, ADDISON-WESLEY, H.NEIL, E. WESTE, KAMRAM ESHRAGHIAN, Seiten 160 bis 173, offenbart alternative CMOS-Logikconfigura-tionen bezüglich des voll komplementären CMOS-Logiggatters. Insbesondere werden die Effekte des nicht idealen Schaltungsverhaltens auf Schaltungen untersucht. Neben der CMOS-Komplementär-Logik, der Pseudo-nMOS-Logik wird auch auf eine dynamische CMOS-Logik eingegangen. Ein dynamisches CMOS-Gatter ist gezeigt, das fünf Operanden A, B; C, D, E verknüpft. Zusätzlich zu fünf Verknüpfungstransistoren, an deren Gates jeweils die Operanden A, B, C, D, E angelegt werden, ist ein Precharge-Transistor, der zwischen V_{DD} und einem Ausgangsknoten Z geschaltet ist, und ein Evaluate-Transistor vorgesehen, der zwischen einem weiteren Knoten und ein Massepotential geschaltet ist.

Fall ist. Delay-insensitive Schaltungen sind eine Unterklasse von asynchronen Schaltungen. Ein Delay-insensitiver Carry-Lookahead-Addierer wird unter Verwendung einer Dual-Rail-Signalisierung für die Eingangsbits, Summenbits und Übertragbits implementiert, wobei ein One-Hot-Code in den internen Signalen verwendet wird. Die internen Signale sind ein Carry-Kill-Signal, ein Carry-Generate-Signal und ein Carry-Propagate-Signal. Ein C-Modul berechnet die Carry-Signale und die Summensignale, während ein D-Modul Block-Carry-Signale und Block-Übertrag-Signale berechnet.

Das Fachbuch "Principles of CMOS VLSI Design", 1985, ADDISON-WESLEY, H.NEIL, E. WESTE, KAMRAM ESHRAGHIAN, Seiten 160 bis 173, offenbart alternative CMOS-Logikconfigura-tionen bezüglich des voll komplementären CMOS-Logiggatters. Insbesondere werden die Effekte des nicht idealen Schaltungsverhaltens auf Schaltungen untersucht. Neben der CMOS-Komplementär-Logik, der Pseudo-nMOS-Logik wird auch auf eine dynamische CMOS-Logik eingegangen. Ein dynamisches CMOS-Gatter ist gezeigt, das fünf Operanden A, B; C, D, E verknüpft. Zusätzlich zu fünf Verknüpfungstransistoren, an deren Gates jeweils die Operanden A, B, C, D, E angelegt werden, ist ein Precharge-Transistor, der zwischen V_{DD} und einem Ausgangsknoten Z geschaltet ist, und ein Evaluate-Transistor vorgesehen, der zwischen einem weiteren Knoten und ein Massepotential geschaltet ist.

Die GB A 2 254 743 offenbart Vektorlogik-Precharge-Schaltungen mit sogenannten "Mousetrap"-Logikgattern, die seriell oder parallel geschaltet sein können, um Logikfunktionen durchführen zu können. Zwei Operanden in invertierter und nicht-invertierter Form werden in eine Schaltung eingegeben, um ausgangsseitig die Parameter P (Proper Gate), K (Kill) und G (Generate) zu erzeugen. Die Parameter P, K, G werden am Ausgang von einem jeweiligen Invertierer erhalten.

Die Aufgabe der vorliegenden Erfindung besteht darin, ein sicheres und effizientes Konzept zum Umsetzen zu schaffen.

Diese Aufgabe wird durch eine Vorrichtung zum Umsetzen gemäß Anspruch 1 oder ein Verfahren zum Umsetzen gemäß Anspruch 16 gelöst.

Der vorliegenden Erfindung liegt die Erkenntnis zugrunde, daß ein annähernd großes Maß an Sicherheit erreicht werden kann, wenn lediglich der Drei-Bit-Halbaddierer in Dual-Rail mit Precharge/Predischarge ausgeführt wird, und der nachfolgende Zwei-Bit-Volladdierer, der aus einer Hintereinanderschaltung eines Carry-Look-Ahead-Elements und einem Sum-Carry-Element besteht, nach wie vor in Single-Rail gestaltet wird, was dazu führt, daß zwar der Drei-Bit-Halbaddierer aufgrund seiner kompletten Dual-Rail-Ausführung doppelt so viel Chipfläche verbraucht, der Zwei-Bit-Volladdierer aber nur in Single-Rail ausgeführt wird, so daß derselbe im Vergleich zu einer kompletten Dual-Rail-Ausführung lediglich die Hälfte an Chipfläche in Anspruch nimmt.

Erfindungsgemäß wird ausgenutzt, daß das Carry-Look-Ahead-Element zum Berechnen eines Propagate-Werts P, eines Kill-Werts K und eines Generate-Werts G eine Ausgabe liefert, die eine One-Hot-Codierung darstellt. Bei der One-Hot-Codierung einer Ausgabe, die aus mehreren Ausgangsleitungen besteht, ist immer nur eine Ausgangsleitung von allen anderen Ausgangsleitungen verschieden. Durch Betreiben der One-Hot-codierten Ausgabe in einem Datenmodus, in dem der Zustand einer Ausgangsleitung von allen anderen Ausgangsleitungen unterschiedlich ist, und einem darauffolgenden Vorbereitungsmodus, der ein Precharge-Modus oder ein Predischarge-Modus sein kann, wird sichergestellt, daß von einem Zyklus zum nächsten am Ausgang des Carry-Look-Ahead-Elements immer dieselbe Anzahl von Übergängen stattfindet, nämlich immer z. B. ein einziger Übergang oder z. B. zwei Übergänge.

Der erfindungsgemäße einerseits schnelle und andererseits sichere und ferner platzsparende Drei-Operanden-Addierer wird daher durch einen Dual-Räil-zu-One-Hot-Konverter erreicht, der eine Dual-Rail-Eingabe in eine One-Hot-codierte Ausgabe mit wenigstens drei Ausgangsoperanden umsetzt.

Erfindungsgemäß wird davon Gebrauch gemacht, daß eine One-Hot-Codierung dann, wenn sie in einem Datenmodus und einem Vorbereitungsmodus betrieben wird, dieselben Sicherheitsanforderungen erfüllt, wie ein Dual-Rail-System, nämlich daß von einem Taktzyklus zum nächsten, also von einem Vorbereitungszyklus zu einem Datenzyklus oder umgekehrt, immer dieselbe Anzahl von Zustandsänderungen auftritt, so daß anhand einer Leistungsanalyse nicht erkennbar ist, welche Bits tatsächlich im Datenzyklus verarbeitet werden.

Die erfindungsgemäße Vorrichtung zum Umsetzen einer Dual-Rail-Eingabe in eine One-Hot-codierte Ausgabe ist dahingehend vorteilhaft, daß sie es ermöglicht, einen Dual-Rail-Drei-Bit-Halbaddierer mit einem Single-Rail-Zwei-Bit-Volladdierer zu kombinieren, um ein schnelles, sicheres und platzsparendes Addierwerk für einen vorzugsweise Kryptoprozessor oder Kryptocoprozessor zu schaffen.

Ein weiterer Vorteil der erfindungsgemäßen Umsetzungsschaltung von Dual-Rail zu One-Hot besteht darin, daß die Schaltung zwei Funktionen gewissermaßen gleichzeitig erfüllt, nämlich einerseits die Dual-Rail-Eirigangssignale logisch richtig verknüpft, um korrekte One-Hot-codierte Ausgangssignale zu erhalten, und andererseits die Umsetzung von Dual-Rail auf Single-Rail gewissermaßen "umsonst" mitliefert.

Eine One-Hot-Codierung, die bei Addierwerken besonders häufig verwendet wird, ist die Propagate-, Kill- und Generate-Codierung. Diese drei addierertypischen Signale sind derart definiert, daß immer nur ein Signal aktiv sein kann. Ein Bitpaar kann nur entweder Propagate = 1 haben oder Kill = 1 haben oder Generate = 1 haben. Ausgangsseitig ist der Dual-Rail-zu-One-Hot-Konverter gemäß der vorliegenden Erfindung mit einem üblichen Single-Rail-Sum-Carry-Element gekoppelt, das aus den drei Look-Ahead-Parametern P, K, G und einem Übertrag (Carry) der nächstniedrigeren Addiererstufe sowohl das Summenbit des aktuellen Bit-Slices berechnet als auch das Übertragbit vom aktuellen Bit-Slice zum nächsthöheren Slice ermittelt und ausgibt.

Ein weiterer Vorteil der erfindungsgemäßen Vorrichtung zum Umsetzen besteht darin, daß die Redundanz des Dual-Rail-Halbaddierers, die aus Sicherheitsaspekten in Kauf genommen wird, von der Logikschaltung der erfindungsgemäßen Vorrichtung vorteilhaft ausgenutzt werden kann, um die One-Hot-codierte Ausgabe mit einer minimalen Anzahl von Transistoren zu berechnen, da logische Verknüpfungen nicht nur aufgrund der üblichen Ausgangssignale des Halbaddierers durchgeführt werden können, sondern auch aufgrund der vorliegenden komplementären Ausgangssignale, so daß der erfindungsgemäße Umsetzer, der gleichzeitig Look-Ahead-Parameter berechnet, und eine Dual-Rail-zu-One-Hot-Umsetzung liefert, auch noch transistorsparend implementierbar ist.

Bei dem Ausführungsbeispiel der vorliegenden Erfindung ist der Logikteil der Umsetzervorrichtung zudem nicht in normaler komplementärer CMOS-Logik aufgebaut, sondern lediglich mit NMOS-Transistoren, die einerseits schneller arbeiten und andererseits leichter zu treiben bzw. insgesamt im Schaltungsentwurf leichter zu handhaben sind als PMOS-Transistoren. Der Umsetzer gemäß diesem bevorzugten Ausführungsbeispiel der vorliegenden Erfindung hat daher eine NMOS-Only-Logik im Gegensatz zu einer üblichen CMOS-Logik, bei der die Transistorarten immer paarweise auftreten, d. h. ein NMOS-Transistor arbeitet mit einem PMOS-Transistor zusammen etc.

Bevorzugte Ausführungsbeispiele der vorliegenden Erfindung werden nachfolgend bezugnehmend auf die beiliegenden Zeichnungen detailliert erläutert. Es zeigen:
- Fig. 1: ein Blockschaltbild einer Vorrichtung zum Umsetzen einer Dual-Rail-Eingabe in eine One-Hot-Ausgabe;
- Fig. 2: eine Wahrheitstabelle der Operationsweise der Schaltung von Fig. 1 im Datenmodus;

- Fig. 3: eine beispielhafte Implementierung der Logikschaltung der Umsetzungsvorrichtung;
- Fig. 4: eine detailliertere Darstellung der Umsetzungsvorrichtung von Fig. 1, in der sichere Potentiale sowohl im Datenmodus als auch im Vorbereitungsmodus geliefert werden;
- Fig. 5: eine Skizze der erfindungsgemäßen Schaltung auf Transistorebene;
- Fig. 6: ein Ablaufdiagramm zum Betreiben der Schaltung von Fig. 5 im Datenmodus und im Vorbereitungsmodus;
- Fig. 7: ein Blockschaltbild eines Drei-Operanden-Addierers mit der Umsetzervorrichtung von Fig. 1; und
- Fig. 8: ein bekannter Drei-Operanden-Addierer ohne Sicherheitsmerkmale.

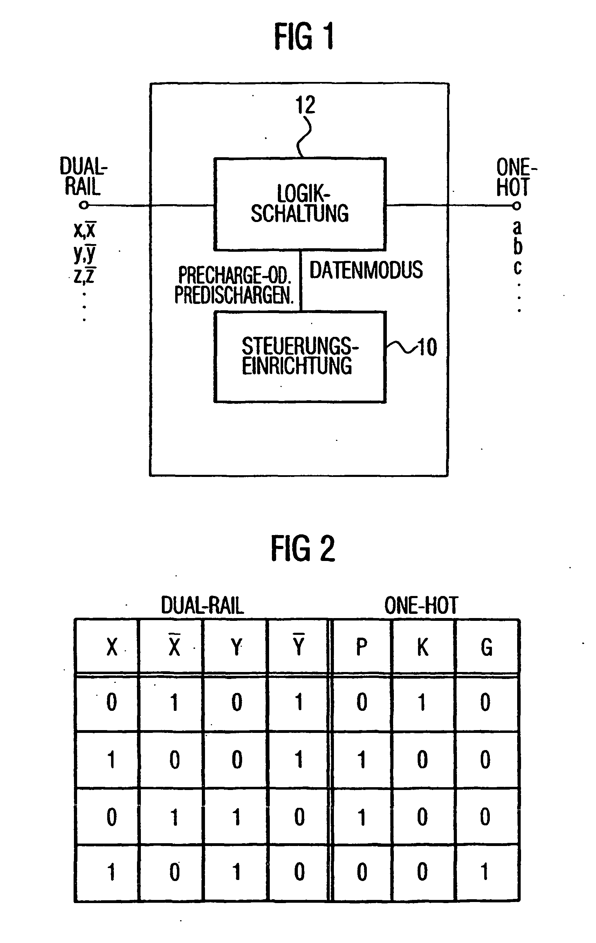

Fig. 1 zeigt eine Vorrichtung zum Umsetzen einer Dual-Rail-Eingabe, die zumindest zwei Nutzoperandenbits x, y, z und eine entsprechende Anzahl von Hilfsoperandenbits x̅, y̅, z̅ aufweist, in eine Ausgabe mit wenigstens drei Ausgangsoperanden a, b, c, wobei die zwei Hilfsoperandenbits in einem Datenmodus komplementär zu den zwei Nutzoperandenbits sind, und wobei je nach Ausführungsbeispiel die zwei Hilfsoperandenbits in einem Vorbereitungsmodus dieselben Werte wie die zwei Nutzoperandenbits haben. Ist der Vorbereitungsmodus ein Precharge-Modus, so haben sowohl die Nutzoperandenbits als auch die Hilfsoperandenbits alle denselben hohen Spannungswert. Ist der Vorbereitungsmodus dagegen mittels eines Predischarge implementiert, so haben sowohl die Nutzoperandenbits als auch die Hilfsoperandenbits einen gleichen niedrigen Spannungswert. Typischerweise wird der hohe Spannungswert als Vdd bezeichnet, während der niedrige Spannungswert als Vss bezeichnet wird und typischerweise 0 V ist.

Die in Fig. 1 gezeigte erfindungsgemäße Umsetzungsvorrichtung umfaßt eine Steuerungseinrichtung 10 zum Betreiben der Vorrichtung in einem Datenmodus und zum Betreiben der Schaltung in einem Vorbereitungsmodus, wobei der Vorbereitungsmodus auf den Datenmodus folgt. Je nach praktischer Implementierung ist der Vorbereitungsmodus einen Vorbereitungszyklus lang und ist der Datenmodus einen Datenzyklus lang, wobei ein Zyklus von einem Taktgenerator abgeleitet wird.

Die in Fig. 1 gezeigte erfindungsgemäße Umsetzervorrichtung umfaßt ferner eine Logikschaltung 12 zum Verknüpfen von zumindest zwei Nutzoperandenbits x, y, z und von zumindest zwei Hilfsoperandenbits x̅, y̅, z̅, derart, daß in dem Datenmodus zwei Ausgangsoperanden a, b der z. B. drei Ausgangsoperanden a, b, c einen anderen Wert als der dritte Ausgangsoperand haben, und wobei die Vorrichtung von Fig. 1 ferner ausgebildet ist, um in dem Vorbereitungstaktzyklus identische Ausgangsoperanden a, b, c zu liefern. In anderen Worten ausgedrückt kann die in Fig. 1 gezeigte Ausgabe, die im Datenmodus eine One-Hot-Codierung darstellt, als "Single-Rail-Ausgabe" mit Precharge bzw. mit Predischarge bezeichnet werden. Im Vorbereitungsmodus sind die Ausgangswerte a, b, c im Falle von Predischarge im niedrigen Spannungszustand, wie z. B. 0 V bzw. Vss. Im Precharge-Betrieb als Vorbereitungsmodus sind die Ausgangsoperanden a, b, c alle im logisch hohen Zustand (Vdd).

An dieser Stelle sei darauf hingewiesen, daß die erfindungsgemäße Umsetzervorrichtung nicht nur zur Berechnung der Look-Ahead-Parameter P, K, G aus Dual-Rail-Eingangsbits x, y bzw. x̅, y̅ verwendet werden kann, sondern daß allgemein jede Dual-Rail-Eingabe, also auch eine Eingabe mit mehr als zwei Nutzoperandenbits in eine One-Hot-Codierung umgesetzt werden kann, die mehr als zwei Ausgangsleitungen aufweist. Die erfindungsgemäße Vorrichtung von Fig. 1 ist somit für jegliche Dual-Rail-zu-One-Hot-Umsetzungen geeignet, solange sich eine Logikschaltung konstruieren läßt, die eine Umsetzung der Nutzoperandenbits x, y, z, ... in eine One-Hot-Codierung gemäß einer Abbildungsvorschrift ermöglicht.

Obgleich im Vorhergehenden und im Nachfolgenden immer von einer "One-Hot"-Codierung gesprochen wird, sei an dieser Stelle darauf hingewiesen, daß eine One-Hot-Codierung selbstverständlich darin bestehen kann, daß z. B. eine von drei Leitungen einen hohen Spannungszustand (Vdd) hat, während die beiden anderen Leitungen einen niedrigen Spannungszustand (Vss) haben. Eine One-Hot-Codierung ist auch eine gewissermaßen inverse Abbildung, bei der eine Leitung einen niedrigen Spannungszustand (Vss) hat, während die beiden anderen Leitungen einen hohen Spannungszustand (Vdd) haben. Im Falle einer inversen Abbildung findet beim Übergang von einem Precharge-Modus in einen Datenmodus am Ausgang der in Fig. 1 gezeigten Vorrichtung immer eine Datenzustandsänderung statt. Im Precharge-Modus sind alle Ausgangsleitungen auf Vdd, während im Datenmodus zumindest eine Ausgangsleitung auf Vss ist. Wird der Precharge-Modus mit einer nichtinvertierten One-Hot-Codierung betrieben, so finden immer von einem Übergang vom Datenmodus in den Vorbereitungsmodus und umgekehrt genau zwei Zustandsänderungen statt.

Wird dagegen der Predischarge-Modus mit dem invertieren Datenmodus kombiniert, so finden ebenfalls zwei Zustandsänderungen statt, wenn von einem Vorbereitungszyklus in einen Datenzyklus und umgekehrt gewechselt wird. Wird dagegen Predischarge mit der nichtinvertierten Abbildung der One-Hot-Codierung kombiniert, so findet lediglich ein Zustandsübergang von einem Datenzyklus zum Vorbereitungszyklus und umgekehrt statt.

Fig. 2 zeigt eine Wahrheitstabelle der Funktionalität der Logikschaltung 12 von Fig. 1 am Beispiel der Erzeugung von Look-Ahead-Parametern P, K, G eines Zwei-Bit-Volladdierers. Wie es bekannt ist, bezeichnet der Look-Ahead-Parameter P, der auch als Propagate bezeichnet wird, den Fall, bei dem genau ein Bit von zwei zu addierenden Bits gleich 1 ist. In diesem Fall wird ein Carry, der von der nächstniedrigeren Bit-Slice kommt, einfach weitergereicht, er breitet sich aus. Sind dagegen beide Eingangsbits in eine Bit-Slice gleich 1, so wird von dieser Bit-Slice ein neuer Carry erzeugt (Generate). Sind dagegen beide Eingangsbits gleich 0, so wird ein möglicherweise in diese Bit-Slice eintretendes Carry von der nächstniedrigeren Stufe von der aktuell betrachteten Bit-Slice absorbiert, der Carry wird also "gekillt".

Aus der rechten Hälfte der in Fig. 2 gezeigten Tabelle ist ersichtlich, daß immer nur entweder P, K oder G einen logischen Zustand "1" haben, d. h. daß P, K, G zusammen eine One-Hot-Codierung darstellen.

Der Parameter P wird durch XOR-Verknüpfung von x und y berechnet. Der Parameter K wird durch NOR-Verknüpfung von x und y erzeugt. Der Parameter G wird durch UND-Verknüpfung von x und y erzeugt, wie es beispielsweise in "Computer Architecture a Quantitative Approach", Hennessy und Patterson, Morgan Kaufmann Publishers, Inc., 1996, Anhang A, beschrieben ist.

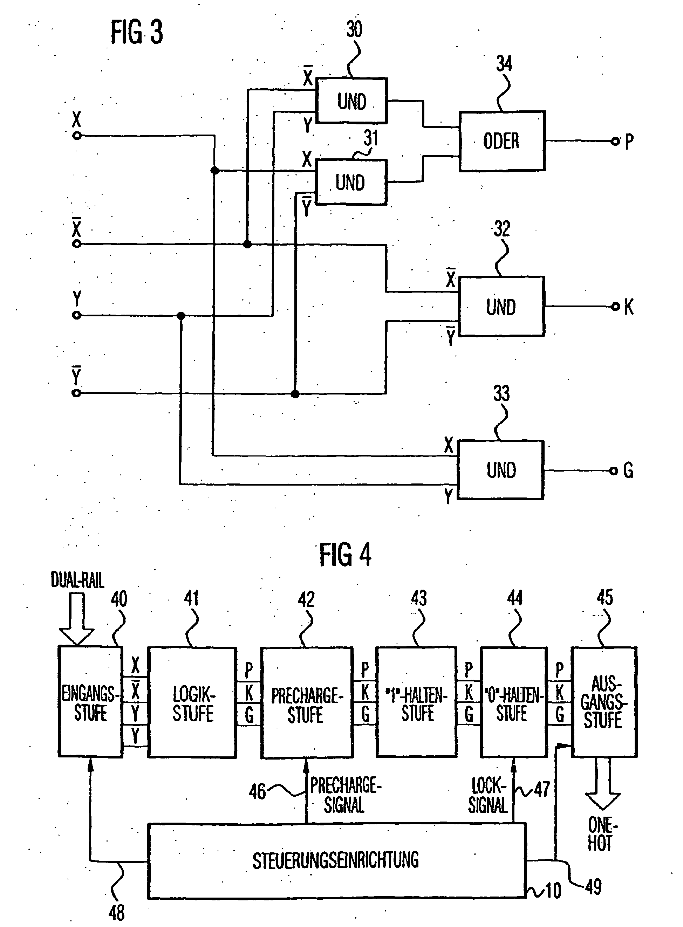

In Anbetracht der Tatsache, daß die Eingabe in den erfindungsgemäßen Umsetzer eine Dual-Rail-Eingabe ist, daß also nicht nur x und y vorliegen, sondern auch x̅ undy̅, kann eine Vielzahl von unterschiedlichen logischen Verknüpfungen eingesetzt werden, um die Parameter P, K und G auf effiziente Art und Weise zu berechnen. Eine bevorzugte Implementierung ist in Fig. 3 dargestellt. Die in Fig. 3 dargestellte Logikschaltung könnte in der in Fig. 1 gezeigten Logikschaltung 12 implementiert werden. Sie umfaßt ein erstes UND-Gatter 30, ein zweites UND-Gatter 31, ein drittes UND-Gatter 32, ein viertes UND-Gatter 33 und ein ODER-Gatter 34. In das erste UND-Gatter 30 wird einerseits x̅ und andererseits y eingespeist. In das zweite UND-Gatter 31 wird einerseits x und andererseits y̅ eingespeist. Die Ausgänge der beiden UND-Gatter 30 und 31 werden einem ODER-Gatter 34 zugeführt, um das P-Ausgangssignal zu erhalten. Das K-Ausgangssignal erhält man durch UND-Verknüpfung von x̅ und y̅ durch das dritte UND-Gatter 32. Den Ausgangsparameter G erhält man durch UND-Verknüpfung von x und y durch das UND-Gatter 33 von Fig. 3.

Die in Fig. 3 dargestellte Logikschaltung hat ferner den Vorteil, daß in dem Fall, in dem die Eingangsparameter x, y, x̅, y̅ im Vorbereitungsmodus alle im niedrigen Zustand sind, ausgangsseitig ebenfalls im Vorbereitungsmodus Ergebnisse geliefert werden, die im niedrigen Zustand sind. Die in Fig. 3 gezeigte Schaltung könnte somit ohne weitere Modifikationen als Umsetzervorrichtung eingesetzt werden, bei der die Eingangsgrößen x, x̅, y, y̅ im Vorbereitungsmodus einer Predischarge-Operation unterzogen werden. Würde die Eingangsseite der in Fig. 3 gezeigten Logikschaltung im Precharge-Modus betrieben werden, so würde im Falle eines Precharge das UND-Gatter 33 ausgangsseitig ebenso wie das UND-Gatter 32 und das ODER-Gatter 34 ein logisch hohes Signal liefern. Im Vorbereitungsmodus wären dann P, K und G gleich 1. Die in Fig. 3 gezeigte Schaltung könnte somit auch unmittelbar für Precharge-betriebene Eingangsdaten verwendet werden und würde im Precharge-Modus ausgangsseitig drei identische Parameter liefern, die nun jedoch den logisch hohen Zustand (Vdd) haben. Werden dagegen die Eingangsdaten im Precharge-Modus betrieben und werden ausgangsseitig niedrige One-Hot-Parameter im Vorbereitungsmodus gewünscht, so könnte den Gattern 34, 33 und 32 ein Inverter nachgeschaltet werden. Alternativ könnten auch die Gatter selbst modifiziert werden, um invertierte Ausgangssignale zu liefern. Daraus ist ersichtlich, daß die erfindungsgemäße Schaltung für verschiedenste Anwendungen ausgestaltet werden kann, die davon bestimmt werden, ob eingangsseitig Precharge- oder Predischarge-Daten geliefert werden und ob ausgangsseitig Precharge-oder Predischarge-Parameter gebraucht werden oder nicht.

Fig. 4 zeigt ein Übersichtsblockdiagramm einer erfindungsgemäßen Umsetzungsvorrichtung gemäß einem bevorzugten Ausführungsbeispiel. Die in Fig. 4 gezeigte Schaltung gliedert sich in eine Eingangsstufe 40, eine Logikstufe 41, eine Precharge-Stufe 42, eine "1"-Halten-Stufe 43, eine "0"-Halten-Stufe 44, eine Ausgangsstufe 45 (die Elemente 40, 41, 42, 43, 44 und 45 entsprechen der Einrichtung 12 von Fig. 1) und eine Steuerungseinrichtung 10 unter, die zu der in Fig. 1 gezeigten Steuerungseinrichtung 10 identisch ist. Die Steuerungseinrichtung 10 ist ausgebildet, um der Precharge-Stufe sowie der "0"-Halten-Stufe ein jeweiliges Signal über Leitungen 46, 47 zuzuführen, und um bei einem bevorzugten Ausführungsbeispiel der vorliegenden Erfindung die Eingangsstufe über eine Eingangssteuerleitung 48 und die Ausgangsstufe über eine Ausgangssteuerungsleitung 49 zu steuern, um klare Verhältnisse für Daten von einer vorausgehenden Schaltung und Daten zu einer nachfolgenden Schaltung zu schaffen, d. h. um zu signalisieren, ob der Vorbereitungsmodus oder der Datenmodus vorliegt.

Bei der in Fig. 4 gezeigten Schaltung sind insbesondere die "1"-Halten-Stufe 43 und die "0"-Halten-Stufe 44 von besonderem Interesse. Die "1"-Halten-Stufe stellt sicher, daß im Datenmodus eine "1" auf den Leitungen P, K oder G sicher gehalten wird, während die "0"-Halten-Stufe 44 sicherstellt, daß eine "0" auf einer Leitung P, K oder G ebenfalls sicher gehalten wird. Diese beiden Stufen sind für den Fall besonders von Bedeutung, bei dem die Datentaktraten derart sind, daß von einem Datenzyklus zum nächsten bereits Ladungsdrifterscheinungen in der Schaltung auftreten, die, wenn die Drift zu lang wird, zu einer reduzierten Zuverlässigkeit der Schaltung führen könnten. Insbesondere erlauben die Schaltungen 43 und 44 auch, daß die Logikstufe 41 in Nur-NMOS-Logik oder selbstverständlich auch in "Nur-PMOS-Logik" implementiert werden kann. Generell werden zwar in Logikschaltungen NMOS-Transistoren bevorzugt, für Fachleute sind jedoch auch Nur-PMOS-Schaltungen auf der Basis der vorliegenden Beschreibung implementierbar. Im Gegensatz zu normalen CMOS-Bausteinen, bei denen Logikgatter immer durch paarweise komplementäre Transistoren aufgebaut werden, ist die erfindungsgemäße Umsetzungsschaltung dahingehend vorteilhaft, daß keine komplementäre Ausführung der Logikgatter erforderlich ist, so daß die Anzahl der Transistoren reduziert werden kann und damit teure Chipfläche eingespart werden kann. Um nicht aufgrund von transienten Drifterscheinungen Nachteile einzuführen, wird es bevorzugt, die Schaltungen 43 und 44 vorzusehen. Dieselben werden jedoch nicht zum Halten der Dual-Rail-Eingangsdaten eingesetzt, sondern zum Halten der One-Hot-codierten Ausgangsdaten, die in ihrer Anzahl typischerweise kleiner sind als die Anzahl der Eingangsdaten, so daß, auch wenn die Schaltungen 43 und 44 vorgesehen werden, ein Chipflächengewinn im Vergleich zu einer üblichen komplementären Gatterauslegung erreicht werden kann.

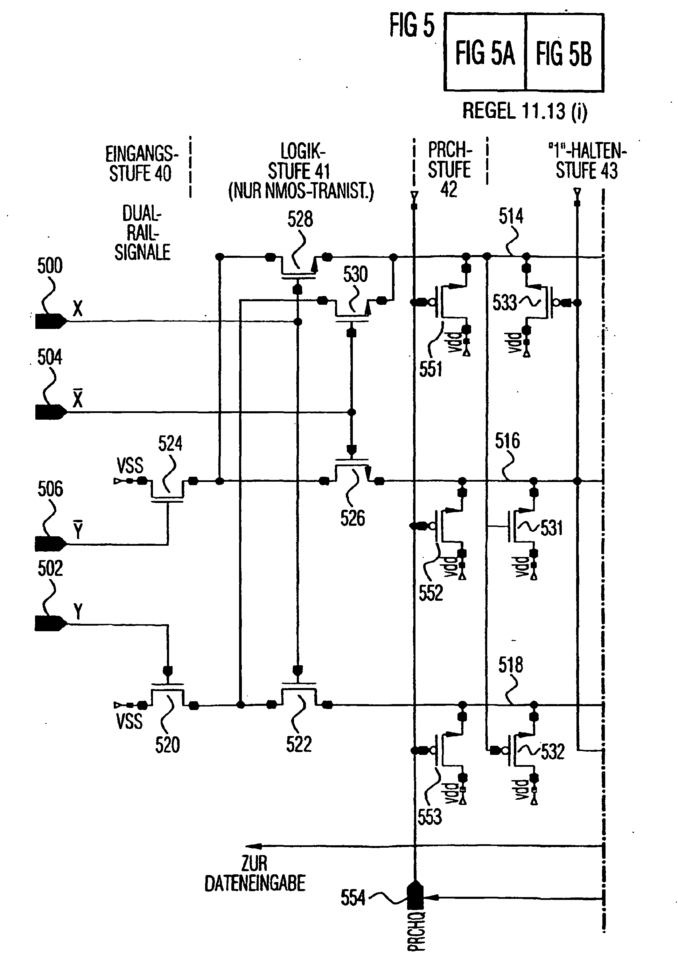

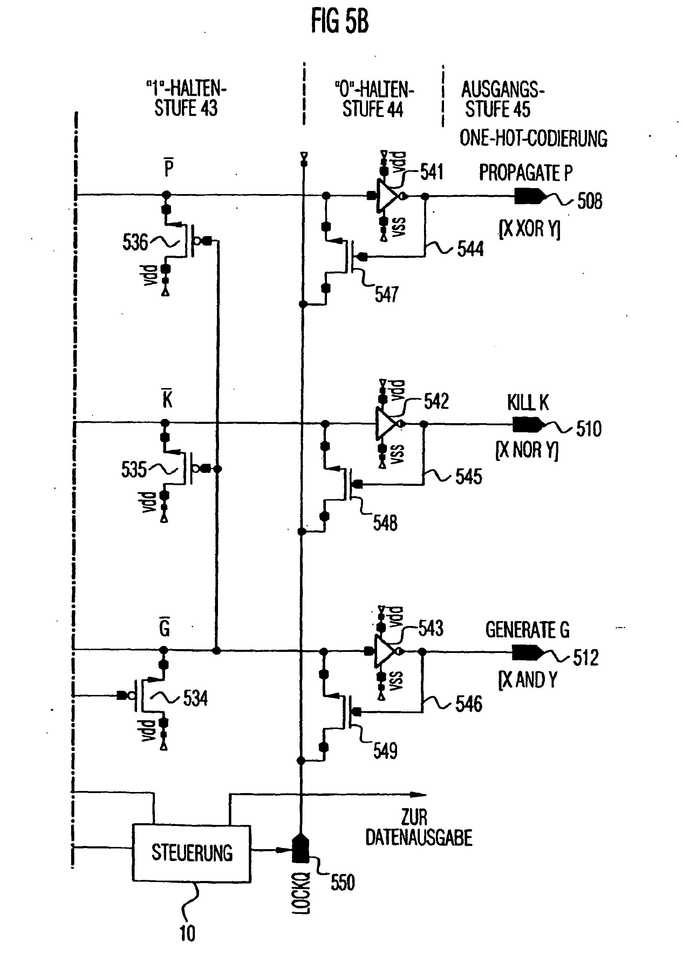

Fig. 5 zeigt ein bevorzugtes Ausführungsbeispiel der erfindungsgemäßen Umsetzervorrichtung auf Transistorebene. Über einen Eingang 500 wird das erste Nutzoperandenbit x angelegt. Über einen Eingang 502 wird das zweite Nutzoperandenbit y eingegeben. Über einen Eingang 504 wird das erste Hilfsoperandenbit x̅ angelegt, das im Datenmodus komplementär zum ersten Hilfsoperandenbit x ist, das über den Eingang 500 eingegeben wird. Über einen Eingang 506 wird das zweite Hilfsoperandenbit y̅ eingegeben, das komplementär zum zweiten Hilfsoperandenbit y ist, das über den Eingang 502 eingegeben wird, wenn die Schaltung im Datenmodus arbeitet. Die in Fig. 5 gezeigte Umsetzervorrichtung umfaßt die in Fig. 4 bereits angesprochene Logikstufe 41, die bei dem in Fig. 5 gezeigten Ausführungsbeispiel lediglich aus NMOS-Transistoren besteht. Das erste Ausgangssignal der One-Hot-codierten Ausgabe ist das Propagate-Signal P, das über einen Ausgang 508 ausgegeben wird. Das Kill-Signal K wird über einen Ausgang 510 ausgegeben. Das Generate-Signal G wird über einen Ausgang 512 ausgegeben.

Am Ausgang der Logikstufe wird bei dem in Fig. 5 gezeigten bevorzugten Ausführungsbeispiel nicht unmittelbar das Propagate-Signal P erzeugt, sondern das invertierte Propagate-Signal P̅, wie es durch einen Knoten 514 dargestellt ist. An einem Knoten 516 wird am Ausgang der Logikstufe 41 das invertierte Kill-Signal K erzeugt. Schließlich wird an einem Knoten 518 das invertierte Generate-Signal G erzeugt. Zur Erzeugung des Generate-Signals G̅ sind ein erster NMOS-Transistor 520 und ein zweiter NMOS-Transistor 522 vorgesehen. An der einen Seite des ersten NMOS-Transistors 520 liegt die niedrige Bezugsspannung Vss an, was dazu führt, daß der Knoten 518 nur dann niedrig ist, wenn sowohl y (Eingang 502) als auch x (Eingang 500) einen logisch hohen Zustand haben.
In diesem Fall sind die beiden Transistoren 520 und 522 durchgeschaltet und Vss liegt direkt am Knoten 518 an. Ist dagegen entweder x oder y oder sind sowohl x als auch y in einem logisch niedrigen Zustand, so ist das Potential am Knoten 518 zunächst unbestimmt, also floatend und wird, wie es nachfolgend noch beschrieben wird, durch die "1"-Halten-Stufe 43 sicher auf einem logisch hohen Zustand gehalten.

Zur Erzeugung des invertierten Kill-Signals K sind ein dritter NMOS-Transistor 524 sowie ein vierter NMOS-Transistor 526 vorgesehen. Sind sowohl x̅ als auch y̅ im logisch hohen Zustand, so werden beide Transistoren 524 und 526 durchgeschaltet, so daß am Knoten 516 unmittelbar Vss anliegt. K ist dann im niedrigen Zustand. Ist dagegen entweder x̅ oder y̅ oder sind sowohl x̅ als auch y̅ im logisch niedrigen Zustand (auf Vss), so ist der Knoten 516 K zunächst floatend, also nicht mit Vss verbunden, und wird, wie es nachfolgend noch beschrieben wird, durch die "1"-Halten-Stufe 43 in den logisch hohen Zustand (Vdd) getrieben.

Der dritte NMOS-Transistor 524 bildet zusammen mit einem fünften NMOS-Transistor 528 das zweite UND-Gatter 31 von Fig. 3. Das erste UND-Gatter 30 von Fig. 3 wird dagegen durch den ersten NMOS-Transistor 520 und einen sechsten NMOS-Transistor 530 implementiert. Die Ausgänge beider Transistoren 528 und 530 sind mit dem Knoten 514 verbunden und bilden somit das ODER-Gatter 34 von Fig. 3 nach. Das invertierte Propagate-Signal P bzw. der Knoten 514 ist immer dann definiert auf dem niedrigen Spannungszustand Vss (aufgrund des Transistors 524 bzw. des Transistors 520), wenn ein UND-Gatter (30 oder 31) ausgangsseitig einen niedrigen Spannungszustand (Vss) liefert. In allen anderen Fällen ist der Zustand des Knotens 514 zunächst floatend und wird durch die "1"-Halten-Stufe 43 in den definierten logisch hohen Zustand (Vdd) gesetzt.

Die Logikstufe 41 selbst ist bei dem in Fig. 5 gezeigten Ausführungsbeispiel daher zunächst wirksam, um definierte "0"-Zustände für P, K oder G zu berechnen, während logisch hohe Zustände von der Logikstufe 41 nicht aktiv belegt werden, was insbesondere auch daraus ersichtlich ist, daß die Logikstufe lediglich mit Vss, also dem niedrigen Spannungszustand, belegt ist, jedoch keinen Knoten aufweist, der mit der hohen Spannung, also Vdd, verbunden ist bzw. verbunden werden kann.

Die sichere Belegung der logisch hohen Zustände wird durch die "1"-Halten-Stufe 43 bewirkt. Die "1"-Halten-Stufe 43 umfaßt drei zueinander analoge Schaltungen, die jeweils aus PMOS-Transistoren bestehen. Eine erste Schaltung der Stufe 43 wird durch einen ersten PMOS-Transistor 531 und einen zweiten PMOS-Transistor 532 gebildet. Die beiden Transistoren 531 und 532 sind ausgebildet, um das an ihnen anliegende hohe Spannungspotential Vdd auf den Knoten 516 (K) und den Knoten 518 (G̅) zu schalten. Das Schalten des hohen Potentials Vdd auf den Knoten 516 und den Knoten 518 findet jedoch nur dann statt, wenn am Knoten 514 ein niedriges Potential, also Vss, anliegt. Ist das Propagate-Signal P also niedrig, wie es durch die Logikstufe 41 bestimmt wird, so werden gewissermaßen automatisch die beiden Knoten 516 und 518 mit Vdd verbunden und von dem eigentlich floatenden Zustand definiert in den hohen Zustand (Vdd) gesetzt.

Die analoge Schaltungsanordnung zum Setzen der Knoten 514 und 518 besteht aus einem dritten PMOS-Transistor 533 und einem vierten PMOS-Transistor 534. Die beiden Transistoren 533 und 534 dienen allgemein gesprochen dazu, in dem Fall, in dem der Knoten 516, also K, definiert auf Vss gesetzt ist, die beiden Knoten 514 und 518 auf den definierten logisch hohen Zustand zu setzen.

Analog hierzu arbeitet die dritte analoge Schaltung, die aus einem fünften PMOS-Transistor 535 und einem sechsten PMOS-Transistor 536 besteht. Wird durch die Logikschaltung bestimmt, daß das invertierte Generate-Signal G niedrig ist, so werden gewissermaßen automatisch das invertierte Kill-Signal K und das invertierte Propagate-Signal P auf den logisch hohen Zustand gesetzt, also durch die Transistoren 535 und 536 mit Vdd verbunden. Die erfindungsgemäße Schaltung ist daher ausgebildet, um immer, wenn das Signal auf einer Ausgangsleitung einen durch die Logikschaltung berechneten Datenzustand hat, die beiden oder mehreren anderen Ausgangsleitungen gewissermaßen "ohne Rücksicht auf Verluste" hochzusetzen. Dies ist möglich, da es eine grundsätzliche Eigenschaft der One-Hot-Codierung ist, daß alle Ausgangsleitungen weniger einer Ausgangsleitung denselben Zustand haben, der komplementär zu dem Zustand der einen Ausgangsleitung ist.

Die "0"-Halten-Stufe 44 erfüllt zwei Funktionen. Zunächst umfaßt jede "0"-Halten-Stufe 44 einen Invertierer 541, 542, 543 für jeden Knoten, um die invertierten Ausgangssignale P, K̅ bzw. G̅ zu invertieren, so daß an den Ausgängen 508, 510 und 512 die nichtinvertierten Ausgangssignale P, K, G vorliegen. Die Invertierer sind dann nicht nötig, wenn die mit der Ausgangsstufe 45 zu verbindende nächste Schaltungsstufe, z. B. eine Sum-Carry-Stufe, z. B. gemäß Fig. 8, mit invertieren Look-Ahead-Parametern arbeitet. Bei dem in Fig. 5 gezeigten bevorzugten Ausführungsbeispiel ist die nachgeschaltete Sum-Carry-Stufe jedoch ausgebildet, um mit den nichtinvertierten Look-Ahead-Parametern zu arbeiten. Die Stufe 44 erfüllt jedoch noch eine weitere vorteilhafte Funktion. Sie ist nämlich vorgesehen, um die "0", also den logisch niedrigen Zustand auf einem Knoten 514, 516, 518 zu halten, und zwar unabhängig davon, was an der Eingangsstufe 40 anliegt. Hierzu ist für jeden Knoten 514, 516, 518 eine Rückkopplungsleitung 544, 545, 546 vorgesehen, die mit dem Gate eines NMOS-Transistors 547, 548 bzw. 549 verbunden ist. Die Transistoren 547, 548, 549 sind wirksam, um ein Signal auf einer LockQ-Leitung 550, welches von der Steuerung 10 bereitgestellt wird, auf einen entsprechend durchgeschalteten Knoten 518, 516 bzw. 514 zu legen. Ist LockQ = 0 V, also auf Vss eingestellt, so wird in dem Fall, in dem ein Knoten P, K, G auf +Vdd ist, nichts passieren. Darüber hinaus wird nichts passieren, wenn ein Knoten P̅, K, G̅ auf 0 V ist. Das Signal LockQ 550 wird auch in diesem Fall keine Umschaltung bewirken. Ein wichtiger Vorteil ist jedoch, daß in dem Fall, in dem eine "0", also Vss, auf einem Knoten 514, 516 oder 518 ist, dieser "0"-Zustand bzw. Vss-Zustand auch dann beibehalten wird, wenn an der Logikstufe 41 etwas manipuliert wird, d. h. wenn beispielsweise die Transistoren 520, 524 der Logikstufe 41 aus irgendeinem Grunde umgeschaltet werden, so daß Vss nicht mehr an dem entsprechenden Knoten 514, 516 bzw. 518 anliegt.

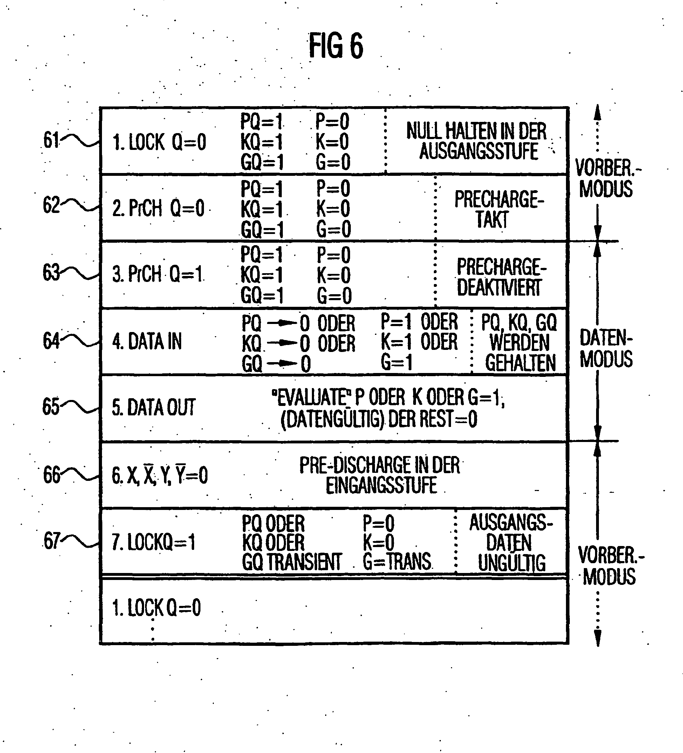

Wie es nachfolgend noch anhand von Fig. 6 detaillierter erläutert werden wird, führt das Anlegen von Vdd an den LockQ-Signaleingang 550 dazu, daß in dem Fall, in dem an den Knoten 514, 516 bzw. 518 ein "0"-Zustand anliegt, also Vss, anliegt, dieser "0"-Zustand in einen "1"-Zustand umgewandelt wird, da durch eine 0 beispielsweise auf dem Knoten 518 das invertierte Signal am Ausgang des Invertierers 543 eine "1" ist, die, wenn sie an das Gate des NMOS-Transistors 549 angelegt wird, dazu führt, daß Vdd, das an der LockQ-Leitung 550 anliegt, auf den Knoten 518 durchgeschaltet wird. Die Stellung LockQ = Vdd wird daher nicht im Datenmodus gewählt, sondern im Vorbereitungsmodus, als Vorbereitung des Prechargings. Auf hohe Zustände an den Knoten 514, 516 und 518, also wenn diese Knoten auf Vdd sind, hat ein LockQ-Signal = Vdd keine Auswirkung, da in diesem Fall die Transistoren 547, 548 bzw. 549 nie gesperrt sind, so daß das LockQ-Potential nicht auf die Knoten 514, 516, 518 übertragen wird.

Die Precharge-Stufe 42 umfaßt, wie es in Fig. 5 gezeigt ist, für jeden Knoten 514, 516, 518 einen Precharge-Transistor 551, 552, 553. Die Transistoren 551, 552, 553 sind als PMOS-Transistoren ausgeführt. Wenn von der Steuerung 10 an einen Precharge-Eingang 554, der auch mit PrchQ bezeichnet ist, Vss, also beispielsweise 0 V, angelegt wird, so werden die drei Transistoren 551, 552, 553 leitend geschaltet, so daß das hohe Potential Vdd unmittelbar an die Knoten 514, 516, 518 angelegt wird. Ist das Signal am Precharge-Eingang 554 dagegen ein hohes Signal (Vdd), so sind alle drei Precharge-Transistoren 551, 552, 553 gesperrt, derart, daß diese Transistoren und der Precharge-Eingang 554 keine Auswirkung auf das Verhalten der Schaltung haben. Der Precharge-Eingang ist daher im Datenmodus auf Vdd, also auf den hohen Spannungszustand, eingestellt.

Im nachfolgenden wird anhand von Fig. 6 eine bevorzugte Abfolge von Signalzuständen und Dateneingabe-/Ausgabesteuerungen für den Vorbereitungsmodus und den Datenmodus dargestellt. Zunächst in einem beliebig herausgegriffenen Schritt 61 wird das Signal 550 (LockQ) auf 0, d. h. auf Vss gestellt. Da sich der Schritt 61 im Vorbereitungsmodus abspielt, sind PQ, KQ und GQ (also P̅, K̅ und G̅) alle auf Vdd, und sind die Ausgänge 508, 510, 512 alle auf Vss. LockQ = 0 hat die Folge, daß die Nullen in den Ausgangsstufen also die "Einsen" auf den Knoten 514, 516, 518 gehalten werden. Dann wird das Signal 554 (PrchQ) auf 0 eingestellt, um den Precharge-Takt durchzuführen. Dies führt dazu, daß die Knoten 514, 516, 518 alle auf einen definierten Vdd-Zustand geladen werden, was ebenso wie bei 61 zur Folge hat, daß die Ausgänge 508, 510, 512 auf Vss sind, wie es für den Vorbereitungsmodus, also den Precharge- bzw. Predischarge-Modus gewünscht ist.

Am Ende des Precharge-Takts wird, wie es bei 63 in Fig. 6 gezeigt ist, die Precharge-Leitung 554 durch Anlegen von Vdd deaktiviert, was jedoch aufgrund der Tatsache, daß immer noch LockQ = 0 anliegt, weder auf die Knoten 514, 516, 518 noch die Ausgängen 508, 510, 512 eine Auswirkung hat. Im wesentlichen gleichzeitig mit der Deaktivierung des Precharge-Zustands oder anschließend können gültige Daten an die Eingänge 500, 502, 504, 506 eingespeist werden, wie es bei 64 in Fig. 6 dargestellt ist. In diesem Fall sind die Signale an den Eingängen 500 und 504 komplementär zueinander. Darüber hinaus sind die Signale an den Eingängen 502 und 506 komplementär zueinander. Die Logikstufe 41 wird bewirken, daß ein Knoten, wie z. B. der Knoten 518, vom Zustand Vdd, also vom hohen Zustand, in den Zustand Vss überwechselt. Die Stufe 43 wird ansprechend darauf bewirken, daß die beiden Knoten 514, 516, die ja durch die Logikstufe 41 nicht definiert belegt werden, auf den definierten Vdd-Zustand gebracht bzw. gehalten werden. Aufgrund der eingespeisten Daten ist, wie es ausgeführt worden ist, bei dem beschriebenen Beispiel der Knoten 518 mit Vss über die Transistoren 522 und 520 verbunden.

Dies führt dazu, daß am Eingang des Inverters 543 eine "0" anliegt. Diese "0" wird durch den Inverter 543 in eine "1", also in Vdd, invertiert, wobei Vdd am Ausgang des Inverters 543 dazu führen wird, daß der Transistor 549 leitend wird. Nachdem bei LockQ 550 nach wie vor Vss anliegt, führen die Rückkopplung über die Rückkopplungsleitung 546 und das Durchschalten des Transistors 549 dazu, daß der niedrige Zustand des Knotens 518 gehalten wird. Sobald der Knoten 518 stabil auf niedrigem Potential ist und damit der Ausgang 512 stabil auf hohem Potential ist, kann das "Evaluate" durchgeführt werden (Schritt 65), d. h. es können gültige Ausgangsdaten von der Ausgangsstufe 45 ausgegeben werden. Die Steuerung der Datenausgabe kann entweder über eine Ausgangssteuerungsleitung durchgeführt werden oder zeitlich gesteuert sein, dahingehend, daß die nachfolgende Sum-Carry-Stufe erst dann Daten von dem erfindungsgemäßen Umsetzer empfängt, wenn sichere Zustände an den Ausgängen 508, 510, 512 vorliegen.

Dann wird vom Datenmodus wieder in den Vorbereitungsmodus gegangen, wie es bei 66 in Fig. 6 dargestellt ist. Im Vorbereitungsmodus sind die Eingangsdaten an den Eingängen 500 - 506 alle gleich und bei dem in Fig. 5 gezeigten bevorzugten Ausführungsbeispiel gleich 0. Dies bedeutet, daß die vorherige Stufe, also der Drei-Bit-Halbaddierer mit Dual-Rail-Ausgang einen Predischarge in seinem Vorbereitungsmodus durchführt. Das Beaufschlagen der Eingänge 500 - 506 führt unmittelbar dazu, daß alle drei Knoten 514, 516, 518 floatend sind, d. h. daß keiner der drei Knoten mit dem niedrigen Potential Vss beaufschlagt ist. Durch die Stufe 43 und die Stufe 44 wird jedoch der Ausgangszustand aus dem Datenmodus am Ausgang beibehalten, unabhängig davon, daß die Eingangsstufe bereits Vorbereitungsmodusdaten erhalten hat. Ein Auslesen der Daten könnte daher auch noch im Schritt 66 stattfinden, obgleich der Schritt 66 bei der in Fig. 6 gezeigten Terminologie bereits zum Vorbereitungsmodus gezählt wird. Wird die Terminologie "Datenmodus" und "Vorbereitungsmodus" auf den Eingang, also auf die Situation an der Eingangsstufe 40 bezogen, so gehört der Schritt 66 bereits zum Vorbereitungsmodus. Wird die Terminologie dagegen auf den Ausgang, also die Ausgangsstufe 45 bezogen, so gehört der Schritt 66 noch zum Datenmodus. Der Ausgang schaltet erst in den Vorbereitungsmodus, wenn das LockQ-Signal auf "1" geschaltet wird.

In diesem Fall wird der eigentlich floatende und durch die Stufe 44 gehaltene Knoten 518 von Vss abgetrennt, was dazu führt, daß die Rückkopplung 546, der Inverter 543 und der Transistor 549 in einem transienten Zustand sind, und daß ebenfalls die Stufe 43, die ja auf der Basis der "0" auf dem Knoten 518 die beiden anderen Leitungen auf "1" hält, ebenfalls in einen gewissermaßen transienten Zustand geraten. In diesem Zustand ist der Knoten 518 nicht mehr sicher mit Vss verbunden. Aufgrund der Tatsache, daß jedoch zum Zeitpunkt des Einschaltens von Vdd an der Leitung 550 der Transistor 549 aufgrund der vorherigen Bedingungen noch offen ist, wird zumindest ein gewisser Teil an Ladung über den Transistor 549 in den Knoten 518 injiziert, bis derselbe so viel Ladung hat, daß der Inverter 543 umkippt und dadurch den Transistor 549 sperrt.

Als nächstes wird LockQ wieder auf 0 gelegt, was typischerweise keine Auswirkung auf die Knoten 514, 516 und 518 hat. Dann, im darauffolgenden Precharge-Takt, in dem Precharge aktiviert wird (Schritt 62), wird die Potentialunsicherheit, die möglicherweise auf den drei Knoten 514, 516, 518 aufgrund der Schritte 66 und 67 entstanden ist, bereinigt, indem jeder Knoten 514, 516, 518 sicher mit Vdd verbunden wird, also in den Prescharge-Zustand versetzt wird, der dann, nach seiner Deaktivierung, in einen Datenmodus übergehen wird.

Die Verwendung der Schrittfolge LockQ = 1 (Schritt 67), LockQ = 0 (Schritt 61) und dann PrchQ = 0 (Schritt 62) stellt sicher, daß die entsprechenden Inverter 541, 542, 543 nicht gegen ihren Zustand "überrissen" werden, was zwar prinzipiell möglich ist, jedoch zu einem beträchtlichen Querstrom durch den Inverter führen kann, welcher wiederum für Stromprofilanalysen zugänglich sein würde. Statt dessen wird der Inverter 543 beispielsweise durch Anlegen von LockQ im Schritt 66 noch auf seinem aktuellen Zustand gehalten, da eingangsseitig über LockQ 550 Vss anliegt und ausgangsseitig Vdd anliegt. Dann wird LockQ auf Vdd geschaltet. Dies führt zu dem beschriebenen transienten Verhalten, dahingehend, daß Ladung in den Knoten 518 injiziert wird, bis der Inverter 543 gewissermaßen freiwillig umkippt, um dann, unmittelbar nach dem Umkippen, die Ladungsinjektion in den Knoten 518 durch Sperren des Transistors 549 zu beenden. Der Inverter 543 wird daher zu keinem Zeitpunkt eingangsseitig und ausgangsseitig mit demselben Zustand beaufschlagt, um beispielsweise eine "1" am Ausgang des Inverters gewissermaßen zwangsweise in eine "0" zu "reißen".

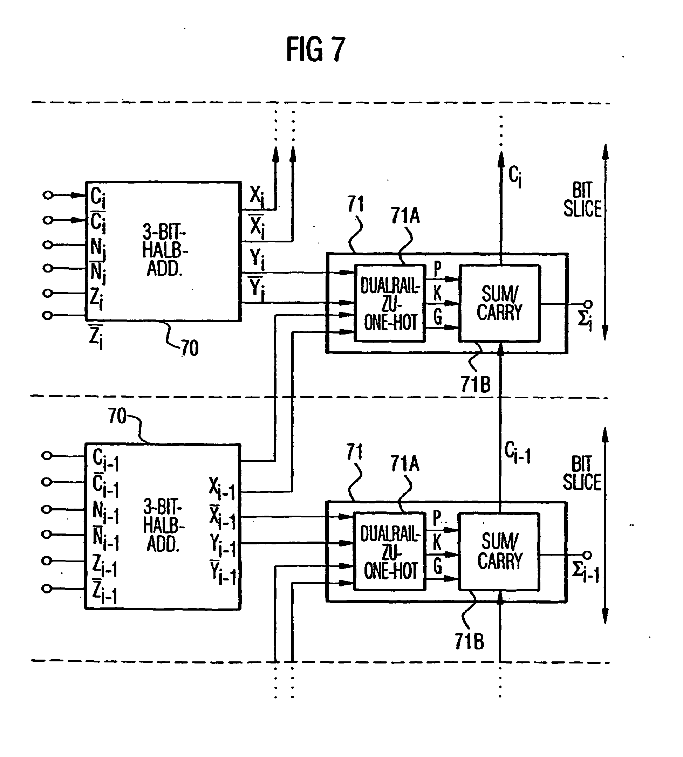

Fig. 7 zeigt ein Blockschaltbild eines Drei-Operanden-Addierers. Der Drei-Bit-Halbaddierer ist in jeder Bit-Slice als Dual-Rail-Schaltung ausgeführt, derart, daß eingangsseitig die drei Operanden als Nutzoperandenbits und die drei invertierten Operanden als Hilfsoperandenbits im Datenmodus eingespeist werden, während ausgangsseitig die beiden Bits x, y als Nutzoperandenbits und die Bits x̅ und y als Hilfsoperandenbits ebenfalls in Dual-Rail ausgegeben werden. Im Vorbereitungsmodus kann der Drei-Bit-Halbaddierer dahingehend betrieben werden, daß sämtliche Eingangsoperanden gleich "0" sind, was dem Predischarge-Betrieb entsprechen würde, oder daß sämtliche Eingangsoperanden einen hohen Spannungszustand haben, was dem Precharge-Zustand entsprechen würde. Ausgangsseitig wird es bevorzugt, daß die Signale xᵢ, x̅ᵢ, yᵢ, y̅ᵢ Predischarge-Signale sind, also bei Vss im Vorbereitungsmodus liegen. Einem in Fig. 7 mit 70 bezeichneten Dual-Rail-Drei-Bit-Halbaddierer ist für die entsprechende Bit-Slice ein Zwei-Bit-Volladdierer 71 nachgeschaltet, der jeweils als erste Stufe den in Fig. 1 und in Fig. 5 gezeigten Dual-Rail-zu-One-Hot-Umsetzer 71a und als zweite Stufe eine üblich aufgebaute Sum-Carry-Stufe 71b aufweist, um das Summenbit für die entsprechende Bit-Slice sowie das Übertragbit der entsprechenden Bit-Slice für die nächsthöhere Bit-Slice zu berechnen. Es sei darauf hingewiesen, daß aufgrund des Dual-Rail-Umsetzers 71a übliche Sum-Carry-Stufen 71b verwendet werden können, da die Stufe 71b selbstverständlich nicht weiß, daß die One-Hot-codierten Look-Ahead-Parameter P, K, G aus Dual-Rail-Eingangswerten erzeugt worden sind.

Der in Fig. 7 dargestellte Drei-Operanden-Addierer weist gegenüber dem in Fig. 8 dargestellten bekannten Drei-Operanden-Addierer folgende Vorteile auf:

Die Halbaddiererstufe ist aufgrund ihrer Ausführung in Dual-Rail-Technik mit Precharge/Predischarge gegenüber Hardwareattacken gesichert. Obgleich die Zwei-Bit-Volladdiererstufe in Fig. 7 lediglich in Single-Rail ausgeführt ist, ist sie dennoch aufgrund der inhärenten Eigenschaften der One-Hot-Codierung gegenüber Hardwareattacken gesichert, verbraucht jedoch im Vergleich zu einer kompletten Ausführung der Zwei-Bit-Volladdiererstufe in Dual-Rail lediglich die halbe Chipfläche. Der in Fig. 7 gezeigte Drei-Operanden-Addierer kann daher flächeneffizient ausgeführt werden.

Aufgrund der Tatsache, daß das in Fig. 7 gezeigte Rechenwerk ebenso wie das in Fig. 8 gezeigte Rechenwerk eine schnelle Addition von drei Operanden ermöglicht, hat die in Fig. 7 gezeigte Schaltung gegenüber der in Fig. 8 gezeigten Schaltung keine Geschwindigkeitseinbußen, wenn berücksichtig wird, daß der Vorbereitungsmodus der Schaltung von Fig. 7, also der Precharge/Predischarge-Betrieb schnell ausführbar ist und zugleich dazu genutzt werden kann, z. B. Eingabe-/Ausgabeoperationen oder Speicheroperationen durchzuführen, so daß der Vorbereitungsmodus insgesamt gesehen nicht ins Gewicht fällt.

Das in Fig. 7 gezeigte Addiererkonzept ist insbesondere nicht auf Drei-Operanden-Addierer begrenzt, sondern kann auch auf N-Operanden-Addierer erweitert werden, wobei N > 3 ist, da N-Operanden-Addierer aus mehreren Drei-Operanden-Addierern gemäß Fig. 7 aufgebaut werden können.

Ein weiterer Vorteil des in Fig. 7 gezeigten Konzepts ist, daß es bereits in Dual-Rail-Technik implementierte Drei-Bit-Addierer insbesondere als Drei-Bit-Carry-Save-Addierer existieren, so daß bereits bestehende Konzepte für den erfindungsgemäßen Drei-Operanden-Addierer eingesetzt werden können, wobei diese bestehenden Konzepte den Vorteil haben, daß sie nicht mehr entwickelt und insbesondere auch nicht mehr getestet werden müssen.

Der erfindungsgemäße Dual-Rail-zu-One-Hot-Umsetzer kann ohne weiteres mit einer Sum-Carry-Stufe, die ebenfalls bereits bekannt, implementiert und getestet ist, kombiniert werden, um einen Carry-Propagate-Addierer aufzubauen, wobei bei dem beschriebenen Ausführungsbeispiel im Precharge-Modus alle Schaltungsknoten P̅, K̅, G̅ auf 1 sind und im Datenmodus, in dem die One-Hot-Codierung vorliegt, genau eine Leitung auf 0 geht. Wenn insbesondere Fig. 5 betrachtet wird, so könnte durch Umkehrung der Transistoren, also von NMOS zu PMOS und von PMOS zu NMOS, auch der umgekehrte Fall realisiert werden, nämlich daß alle Knoten 514, 516, 518 von Fig. 5 im Vorbereitungsmodus auf Vss, also auf einer niedrigen Spannung, sind, und nur ein Knoten im Datenbetrieb gemäß der One-Hot-Codierung in einen hohen Spannungszustand überwechselt. Wie es ausgeführt worden ist, wird es bevorzugt, den erfindungsgemäßen Umsetzer mit einer Schaltung zu versehen, die sicherstellt, daß ansprechend auf einen gültigen Datenzustand auf einem Knoten die anderen Knoten komplementär gesetzt werden, wobei ferner eine weitere Schaltung vorzugsweise vorgesehen wird, die ferner den gültigen Datenzustand hält bzw. "sichert".

Ein weiterer Vorteil des erfindungsgemäßen Umsetzers besteht darin, daß derselbe transistorsparend, also chipflächensparend implementierbar ist, wenn die komplementären Signale der Dual-Rail-Eingabe, also die Hilfsoperandenbits, jeweils letztendlich dazu führen, daß eine Logik mit lediglich Transistoren eines einzigen Transistortyps, also entweder NMOS oder PMOS, aufbaubar ist. Hierfür werden aufgrund des einfacheren Handlings für den Schaltungsentwickler und der Geschwindigkeitsvorteile NMOS-Transistoren bevorzugt.

Abhängig von den Gegebenheiten kann das erfindungsgemäße Verfahren zum Umsetzen in Hardware oder in Software implementiert werden. Die Implementierung kann auf einem digitalen Speichermedium, insbesondere einer Diskette oder CD mit elektronisch auslesbaren Steuersignalen erfolgen, die so mit einem programmierbaren Computersystem zusammenwirken können, daß das entsprechende Verfahren ausgeführt wird. Allgemein besteht die Erfindung somit auch in einem Computerprogrammprodukt mit auf einem maschinenlesbaren Träger gespeicherten Programmcode zur Durchführung des erfindungsgemäßen Verfahrens, wenn das Computerprogrammprodukt auf einem Rechner abläuft. In anderen Worten ausgedrückt, ist die vorliegende Erfindung somit auch ein Computerprogramm mit einem Programmcode zur Durchführung des Verfahrens zum Umsetzen, wenn das Computerprogramm auf einem Computer abläuft.

## Patentansprüche

1. Vorrichtung zum Umsetzen einer Dual-Rail-Eingabe, die zwei Nutzoperandenbits (x, y) und zwei Hilfsoperandenbits (x̅, y̅) aufweist, in eine Ausgabe mit drei Ausgangsoperanden (P, K, G), wobei die zwei Hilfsoperandenbits in einem Datenmodus komplementär zu den zwei Nutzoperandenbits sind, mit folgenden Merkmalen:
einer Steuerungseinrichtung (10) zum abwechselnden Betreiben der Vorrichtung in einem Datenmodus, in einem Vorbereitungsmodus, der auf den Datenmodus folgt, und wieder in einem Datenmodus, der auf den Vorbereitungsmodus folgt; und
einer Logikschaltung (12) zum Verknüpfen der zwei Nutzoperandenbits und der zwei Hilfsoperandenbits, derart, daß in dem Datenmodus zwei Ausgangsoperanden der drei Ausgangsoperanden einen anderen Wert als ein dritter Ausgangsoperand der drei Ausgangsoperanden haben,
wobei die Logikschaltung ferner ausgebildet ist, um in dem Vorbereitungsmodus sicherzustellen, daß die drei Ausgangsoperanden denselben Wert haben, und
wobei die Logikschaltung (12) folgende Merkmale aufweist:
eine Logikstufe (41) zum logischen Verknüpfen der Nutzoperandenbits und der Hilfsoperandenbits gemäß einer Verknüpfungsvorschrift;
eine Precharge-Stufe (42) zum Versetzen der Ausgangsoperanden in denselben Zustand in dem Vorbereitungsmodus;
wobei die Vorrichtung **dadurch gekennzeichnet ist, dass** die Logikschaltung (12) folgende weiteren Merkmale aufweist:
eine "1"-Halten-Stufe (43) zum Halten von zwei Ausgangsoperanden in einem identischen Zustand ansprechend auf einen zu dem identischen Zustand komplementären Zustand des dritten Ausgangsoperanden; und
eine "0"-Halten-Stufe (44) zum Halten des dritten Ausgangsoperanden in dem komplementären Zustand, wobei die "0"-Halten-Stufe (44) einen Invertierer (541, 542, 543), einen Rückkopplungszweig (544, 545, 546) und einen Lock-Transistor (547, 548, 549), aufweist, wobei ein Eingang des Lock-Transistors mit einem Lock-Signal (550) verbindbar ist, wobei ein Ausgang des Lock-Transistors mit einem Eingang eines jeweiligen Inverters verbindbar ist, und wobei ein Steuereingang des Lock-Transistors mit dem Rückkopplungszweig verbunden ist.

2. Vorrichtung gemäß Anspruch 1,
bei der die Logikschaltung ausgebildet ist, um eine Addierer-Look-Ahead-Funktionalität zu haben, so daß die drei Ausgangsoperanden Look-Ahead-Parameter für die zwei Nutzoperandenbits darstellen.

3. Vorrichtung gemäß Anspruch 2,
bei der ein erster Ausgangsoperand einen Propagate-Parameter (P) oder einen komplementären Propagate-Parameter (P̅) für die zwei Nutzoperandenbits darstellt,
bei der ein zweiter Ausgangsoperand einen Kill-Parameter (K̅) oder einen komplementären Kill-Parameter (K̅) für die zwei Nutzoperandenbits darstellt, und
bei der ein dritter Ausgangsoperand einen Generate-Parameter (G) oder einen komplementären Generate-Parameter (G̅) für die zwei Nutzoperandenbits darstellt.

4. Vorrichtung gemäß einem der vorhergehenden Ansprüche, bei der die Logikschaltung folgende Merkmale aufweist:
eine erste UND-Verknüpfungseinrichtung (30) zum Verknüpfen des ersten Hilfsoperanden (x̅) und des zweiten Nutzoperanden (y), um ein erstes UND-Ausgangssignal zu erzeugen;
eine zweite UND-Verknüpfungseinrichtung (31) zum Verknüpfen des ersten Nutzoperanden und des zweiten Hilfsoperanden, um ein zweites UND-Ausgangssignal zu erzeugen;
eine ODER-Verknüpfungseinrichtung (34) zum Verknüpfen des ersten UND-Ausgangssignals und des zweiten UND-Ausgangssignals, um einen Propagate-Parameter (P) zu liefern;
eine dritte UND-Verknüpfungseinrichtung (32) zum Verknüpfen des ersten Hilfsoperandenbits (x̅) und des zweiten Hilfsoperandenbits (y̅), um einen Kill-Parameter (K) zu liefern; und
eine vierte UND-Verknüpfungseinrichtung zum Verknüpfen des ersten Nutzoperandenbits (x̅) und des zweiten Nutzoperandenbits (y), um einen Generate-Parameter (G) zu erzeugen.

5. Vorrichtung gemäß einem der vorhergehenden Ansprüche, bei der die Logikschaltung (12) folgende Merkmale aufweist:
eine Einrichtung (41) zum logischen Verknüpfen der zwei Nutzoperandenbits und der zwei Hilfsoperandenbits, derart, daß in dem Datenmodus die drei Ausgangsoperanden gemäß einer vorbestimmten Verknüpfungsvorschrift berechnet werden.

6. Vorrichtung gemäß Anspruch 1, wobei die "0"-Halten-Stufe ausgebildet ist, um ansprechend auf einen gültigen "0"-Zustand eines Ausgangsoperanden diesen "0"-Zustand unabhängig von an der Logikschaltung (12) anliegenden Eingaben zu halt ten.

7. Vorrichtung gemäß einem der vorhergehenden Ansprüche,
bei der die Logikschaltung (12) ferner eine Vorbereitungseinrichtung (42) aufweist, die ausgebildet ist, um im Vorbereitungsmodus die drei Ausgangsoperanden unabhängig von einer Ausgabe einer Logikeinrichtung zum logischen Verknüpfen der Eingangsdaten in dem Vorbereitungsmodus auf denselben Wert zu legen, und
wobei die Logikschaltung ferner ausgebildet ist, um im Vorbereitungsmodus einen Querstrom von einem Punkt mit hohem Spannungspotential (Vdd) zu einem Bezugspotential (Vss) zu unterbinden.

8. Vorrichtung gemäß Anspruch 1, bei der die Logikstufe (41) ausgebildet ist, um lediglich NMOS-Transistoren zu umfassen.

9. Vorrichtung gemäß Anspruch 1 oder 8, bei der die Logikstufe folgende Merkmale aufweist:
einen ersten Transistor (520) und einen zweiten Transistor (522), wobei der erste Transistor (520) von dem zweiten Nutzoperandenbit (y) steuerbar ist, und wobei der zweite Transistor von dem ersten Nutzoperandenbit (x) steuerbar ist, wobei der erste Transistor (520) und der zweite Transistor (522) in Reihe geschaltet sind, wobei an einem Eingang der beiden Transistoren ein Bezugspotential anliegt, und wobei an einem Ausgang (518) der beiden Transistoren (520, 522) ein komplementärer Generate-Parameter (G) erhalten wird;
einen dritten Transistor (524) und einen vierten Transistor (526), wobei der dritte Transistor (524) und der vierte Transistor (526) in Reihe geschaltet sind, wobei einer der Transistoren mit dem Bezugspotential (Vss) verbunden ist, und wobei an einem Ausgang (516) des anderen Transistors (526) ein invertierter Kill-Parameter (K̅) erhaltbar ist, wobei der dritte Transistor (524) durch das zweite Hilfsoperandenbit (y̅) steuerbar ist, und wobei der vierte Transistor (526) durch das erste Hilfsoperandenbit (X̅) steuerbar ist;
einen fünften Transistor (528), der mit dem dritten Transistor (524) in Serie geschaltet ist, wobei der fünfte Transistor (528) an einem Ausgang (514) desselben einen invertierten Propagate-Parameter (P̅̅̅) liefern kann, wobei der fünfte Transistor von dem ersten Nutzoperandenbit steuerbar ist, wobei ferner ein sechster Transistor (530) vorgesehen ist, der von dem ersten Hilfsoperandenbit (x̅) steuerbar ist, dessen Ausgang mit dem Ausgang (514) des fünften Transistors (528) identisch ist und der in Serie mit dem ersten Transistor geschaltet ist.

10. Vorrichtung gemäß einem der Ansprüche 1 bis 9, bei der die Nutzoperandenbits und die Hilfsoperandenbits im Vorbereitungsmodus in einem niedrigen Spannungszustand sind, wobei in dem Vorbereitungsmodus für die Nutzoperandenbits und die Hilfsoperandenbits eine Predischarge-Operation durchgeführt worden ist.

11. Vorrichtung gemäß einem der Ansprüche 1 bis 10, bei der die Precharge-Stufe (42) und die "1"-Halten-Stufe (43) lediglich PMOS-Transistoren aufweisen.

12. Vorrichtung gemäß Anspruch 1, bei der der Lock-Transistor als NMOS-Transistor ausgeführt ist.

13. Vorrichtung gemäß Anspruch 12, bei der das Lock-Signal in dem Datenmodus auf einem niedrigen Bezugspotential (Vss) einstellbar ist und im Vorbereitungsmodus zunächst auf ein hohes Potential (Vdd) und dann wieder auf das niedrige Potential (Vss) schaltbar ist.

14. Vorrichtung gemäß einem der Ansprüche 1 bis 13, bei der die Logikstufe (41) ausgebildet ist, um in dem Vorbereitungsmodus, in dem die Nutzoperandenbits und die Hilfsoperandenbits denselben Zustand haben, Ausgangsparameterknoten (514, 516, 518) nicht mit einem definierten Bezugspotential zu beaufschlagen.

15. Vorrichtung gemäß einem der Ansprüche 1 bis 14, bei der die Steuerungseinrichtung (10) ausgebildet ist, um das Lock-Signal (550) in dem Datenmodus auf einem niedrigen Zustand zu halten,
um das Precharge-Signal (554) in dem Datenmodus in einem hohen Zustand zu halten (63), um in dem Vorbereitungsmodus das Lock-Signal (550) in einen hohen Zustand zu bringen (67), um dann das LockQ-Signal wieder in einen niedrigen Zustand zu bringen (61), und um erst dann, nachdem das LockQ-Signal in einen niedrigen Zustand gebracht ist, das Precharge-Signal (554) in einen niedrigen Zustand zu bringen, um eine Precharge-Operation durchzuführen.

16. Verfahren zum Umsetzen einer Dual-Rail-Eingabe, die zwei Nutzoperandenbits (x, y) und zwei Hilfsoperandenbits (x̅, y̅) aufweist, in eine Ausgabe mit drei Ausgangsoperanden (P, K, G), wobei die zwei Hilfsoperandenbits in einem Datenmodus komplementär zu den zwei Nutzoperandenbits sind, mit folgenden Schritten:
Betreiben (10) der Vorrichtung abwechselnd in einem Datenmodus, in einem Vorbereitungsmodus, der auf den Datenmodus folgt, und wieder in einem Datenmodus; und
Verknüpfen (12) der zwei Nutzoperandenbits und der zwei Hilfsoperandenbits mit einer Logikschaltung, derart, daß in dem Datenmodus zwei Ausgangsoperanden der drei Ausgangsoperanden einen anderen Wert als ein dritter Ausgangsoperand der drei Ausgangsoperanden haben, und
Sicherstellen (62), daß in dem Vorbereitungsmodus die drei Ausgangsoperanden denselben Wert haben,
wobei die Logikschaltung (12) folgende Schritte ausführt:
logisches Verknüpfen der Nutzoperandenbits und der Hilfsoperandenbits gemäß einer Verknüpfungsvorschrift durch eine Logikstufe (41);
Versetzen der Ausgangsoperanden in denselben Zustand in dem Vorbereitungsmodus durch eine Precharge-Stufe (42);
wobei das Verfahren **dadurch gekennzeichnet ist, dass** die Logikschaltung folgende weiteren Schritte ausführt:
Halten von zwei Ausgangsoperanden in einem identischen Zustand ansprechend auf einen zu dem identischen Zustand komplementären Zustand des dritten Ausgangsoperanden durch eine "1"-Halten-Stufe (43); und
Halten des dritten Ausgangsoperanden in dem komplementären Zustand durch eine "0"-Halten-Stufe (44), wobei die "0"-Halten-Stufe (44) einen Invertierer (541, 542, 543), einen Rückkopplungszweig (544, 545, 546) und einen Lock-Transistor (547, 548, 549), aufweist, wobei ein Eingang des Lock-Transistors mit einem Lock-Signal (550) verbindbar ist, wobei ein Ausgang des Lock-Transistors mit einem Eingang eines jeweiligen Inverters verbindbar ist, und wobei ein Steuereingang des Lock-Transistors mit dem Rückkopplungszweig verbunden ist.

## Claims

1. Apparatus for converting a dual-rail input, comprising two useful operand bits (x, y) and two auxiliary operand bits (*x̅̅̅* ,*y̅̅̅* ), to an output having three output operands (P, K, G), the two auxiliary operand bits being, in a data mode, complementary to the two useful operand bits, the apparatus comprising:
control means (10) for alternately operating the apparatus in a data mode and in a preparation mode following the data mode, and again in a data mode following the preparation mode; and
a logic circuit (12) for combining the two useful operand bits and the two auxiliary operand bits such that, in the data mode, two output operands of the three output operands have a value which is different from that of a third output operand of the three output operands,
wherein the logic circuit is further configured to ensure, in the preparation mode, that the three output operands have the same value, and
wherein the logic circuit (12) comprises:
a logic stage (41) for logically combining the useful operand bits and the auxiliary operand bits in accordance with a combining rule;
a precharge stage (42) for placing the output operands into the same state in the preparation mode;
wherein the apparatus is **characterized in that** the logic circuit (12) further comprises:
a hold-" 1 " stage (43) for holding two output operands in an identical state in response to a state of the third output operand which is complementary to the identical state; and
a hold-"0" stage (44) for holding the third output operand in the complementary state, wherein the hold-"0" stage comprises an inverter (541, 542, 543), a feedback branch (544, 545, 546) and a lock transistor (547, 548, 549), an input of the lock transistor being connectable to a lock signal (550), an output of the lock transistor being connectable to an input of a respective inverter, and a control input of the lock transistor being connected to the feedback branch.

2. Apparatus as claimed in claim 1,
wherein the logic circuit is configured to comprise an adder-lookahead functionality, so that the three output operands represent lookahead parameters for the two useful operand bits.

3. Apparatus as claimed in claim 2,
wherein a first output operand represents a propagate parameter (P) or a complementary propagate parameter (*P̅̅̅*) for the two useful operand bits,
wherein a second output operand represents a kill parameter (K) or a complementary kill parameter (*K̅*) for the two useful operand bits, and
wherein a third output operand represents a generate parameter (G) or a complementary parameter (*G̅*) for the two useful operand bits.

4. Apparatus as claimed in any one of the previous claims, wherein the logic circuit further comprises:
first AND operation means (30) for combining the first auxiliary operand (*x̅*) and the second useful operand (y) to generate a first AND output signal;
second AND operation means (31) for combining the first useful operand and the second auxiliary operand to generate a second AND output signal;
OR operation means (34) for combining the first AND output signal and the second output signal to provide a propagate parameter (P);
third AND operation means (32) for combining the first auxiliary operand bit (*x̅*) and the second auxiliary operand bit (*y̅*) to provide a kill parameter (K); and
fourth AND operation means for combining the first useful operand bit (x) and the second useful operand bit (y) to generate a generate parameter (G).

5. Apparatus as claimed in any one of the previous claims, wherein the logic circuit (12) comprises:
means (41) for logically combining the two useful operand bits and the two auxiliary operand bits such that, in the data mode, the three output operands are calculated in accordance with a predetermined combining specification.

6. Apparatus as claimed in claim 1, wherein the hold-"0" stage is configured to hold this "0" state, in response to a valid "0" state of an output operand, independently of inputs present at the logic circuit (12).

7. Apparatus as claimed in any one of the previous claims,
wherein the logic circuit (12) further comprises preparation means (42) configured to place, in the preparation mode, the three output operands at the same value independently of an output of a logic means for logically combining the input data in the preparation mode, and
wherein the logic circuit is further configured to suppress, in the preparation mode, a shunt current from one point having a high voltage potential (Vdd) to a reference potential (Vss).

8. Apparatus as claimed in claim 1, wherein the logic stage (41) is configured to include only NMOS transistors.

9. Apparatus as claimed in claim 1 or 8, wherein the logic stage comprises:
a first transistor (520) and a second transistor (522), the first transistor (520) being controllable by the second useful operand bit (y), and the second transistor being controllable by the first useful operand bit (x), the first transistor (520) and the second transistor (522) being connected in series, a reference potential being applied at an input of the two transistors, and a complementary generate parameter (*G̅̅̅*) being obtained at an output (518) of the two transistors (520, 522);
a third transistor (524) and a fourth transistor (526), the third transistor (524) and the fourth transistor (526) being connected in series, one of the transistors being connected to the reference potential (Vss), and an inverted kill parameter (*K̅*) being obtainable at an output (516) of the other transistor (526), the third transistor (524) being controllable by the second auxiliary operand bit (*y̅*), and the fourth transistor (526) being controllable by the first auxiliary operand bit (*x̅*);
a fifth transistor (528) connected in series to the third transistor (524), the fifth transistor (528) being able to provide, at an output (514) of same, an inverted propagate parameter (*P̅̅̅*), the fifth parameter being controllable by the first useful operand bit, a sixth transistor (530) being additionally provided which is controllable by the first auxiliary operand bit (x), the output of which is identical to the output (514) of the fifth transistor (528) and which is connected in series to the first transistor.

10. Apparatus as claimed in any one of claims 1 to 9, wherein the useful operand bits and the auxiliary operand bits are in a low voltage state in the preparation mode, a predischarge operation having been performed, in the preparation mode, for the useful operand bits and the auxiliary operand bits.

11. Apparatus as claimed in any one of claims 1 to 10, wherein the precharge stage (42) and the hold-" I" stage (43) comprise only PMOS transistors.

12. Apparatus as claimed in claim 1, wherein the lock transistor is configured as an NMOS transistor.

13. Apparatus as claimed in claim 12, wherein the lock signal in the data mode may be set to a low reference potential (Vss), and may be switched, in the preparation mode, initially to a high potential (Vdd) and then again to the low potential (Vss).

14. Apparatus as claimed in any one of claims 1 to 13, wherein the logic stage (41) is configured so as not to impose a defined reference potential on output parameter nodes (514, 516, 518) in the preparation mode, wherein the useful operand bits and the auxiliary operand bits have the same state.

15. Apparatus as claimed in any one of claims 1 to 14, wherein the control means (10) are configured to keep the lock signal (550) at a low state in the data mode,
to keep the precharge signal (554) in a high state (63) in the data mode, to place the lock signal (550), in the preparation mode, in a high state (67), to then place the lockQ signal in a low state (61) again, and to place the precharge signal (554) into a low state, only after the lockQ signal has been placed in a low state, to perform a precharge operation.

16. Method for converting a dual-rail input, comprising two useful operand bits (x, y) and two auxiliary operand bits (*x̅*, *y̅*), to an output having three output operands (P, K, G), the two auxiliary operand bits being, in a data mode, complementary to the two useful operand bits, the method comprising:
operating (10) the apparatus alternately in a data mode, in a preparation mode following the data mode and again in a data mode; and
combining (12) the two useful operand bits and the two auxiliary operand bits with a logic circuit such that, in the data mode, two output operands of the three output operands have a value which is different from that of a third output operand of the three output operands, and
ensuring (62) that, in the preparation mode, the three output operands have the same value,
wherein the logic circuit (12) carries out the steps of:
logically combining the useful operand bits and the input operand bits in accordance with a combining rule, by a logic stage (41);
placing the output operands into the same state in the preparation mode, by a precharge stage (42);
the method being **characterized in that** the logic circuit further carries out the steps of:
holding two output operands in an identical state in response to a state of the third output operand which is complementary to the identical state, by a hold-"1" stage (43); and
holding the third output operand in the complementary state by a hold-"0" stage (44), wherein the hold-"0" stage comprises an inverter (541, 542, 543), a feedback branch (544, 545, 546) and a lock transistor (547, 548, 549), an input of the lock transistor being connectable to a lock signal (550), an output of the lock transistor being connectable to an input of a respective inverter, and a control input of the lock transistor being connected to the feedback branch.

## Revendications

1. Dispositif pour convertir une entrée à double rail présentant deux bits d'opérande utiles (x, y) et deux bits d'opérande auxiliaires (*x̅*,*y̅*) en une sortie à trois opérandes de sortie (P, K, G), les bits d'opérande auxiliaires étant, dans un mode de données, complémentaires aux deux bits d'opérande utiles, aux caractéristiques suivantes:
un moyen de commande (10) destiné au fonctionnement alterné du dispositif en un mode de données, en un mode de préparation qui suit le mode de données, et à nouveau en un mode de données qui suit le mode de préparation; et
un circuit logique (12) destiné à coupler les deux bits d'opérande utiles et les deux bits d'opérande auxiliaires de sorte que, en mode de données, deux opérandes de sortie parmi les trois opérandes de sortie aient une autre valeur qu'un troisième opérande de sortie,
le circuit logique étant par ailleurs réalisé de manière à assurer, en mode de préparation, que les trois opérandes de sortie aient la même valeur, et
le circuit logique (12) présentant les caractéristiques suivantes:
un étage logique (41) destiné au couplage logique des bits d'opérande utiles et des bits d'opérande auxiliaires selon une règle de couplage;
un étage de précharge (42) destiné à amener les opérandes de sortie dans le même état en mode de préparation;
le dispositif est **caractérisé par le fait que** le circuit logique (12) présente les autres caractéristiques suivantes:
un étage de maintien de "1" (43) destiné à maintenir deux opérandes de sortie dans un état identique en réaction à un état complémentaire à l'état identique du troisième opérande de sortie; et
un étage de maintien de "0" (44) destiné à maintenir le troisième opérande de sortie à l'état complémentaire, l'étage de maintien de "0" présentant un inverseur (541, 542, 543), un branchement de couplage rétroactif (544, 545, 546) et un transistor de blocage (547, 548, 549), une entrée du transistor de blocage pouvant être reliée à un signal de blocage (550), une sortie du transistor de blocage pouvant être reliée à une entrée d'un inverseur respectif, et une entrée de commande du transistor de blocage étant reliée au branchement de couplage rétroactif.

2. Dispositif selon la revendication 1,
dans lequel le circuit logique est réalisé de manière à avoir une fonctionnalité de prédiction d'additionneur, de sorte que les trois opérandes de sortie représentent des paramètres de prédiction pour les deux bits d'opérande utiles.

3. Dispositif selon la revendication 2,
dans lequel un premier opérande de sortie représente un paramètre propagation (P) ou un paramètre de propagation complémentaire (*P̅*) pour les deux bits d'opérande utiles,
dans lequel un deuxième opérande de sortie représente un paramètre d'élimination (K) ou un paramètre d'élimination complémentaire (*K̅*) pour les deux bits d'opérande utiles, et
dans lequel un troisième opérande de sortie représente un paramètre de génération (G) ou un paramètre de génération complémentaire (*G̅*) pour les deux bits d'opérande utiles.

4. Dispositif selon l'une des revendications précédentes, dans lequel le circuit logique présente les caractéristiques suivantes:
un premier moyen de couplage ET (30) destiné à coupler le premier opérande auxiliaire (*x̅*) et le deuxième opérande utile (y), pour générer un premier signal de sortie ET;
un deuxième moyen de couplage ET (31) destiné à coupler le premier opérande utile et le deuxième opérande auxiliaire, pour générer un deuxième signal de sortie ET;
un moyen de couplage OU (34) destiné à coupler le premier signal de sortie ET et le deuxième signal de sortie ET, pour fournir un paramètre de propagation (P);
un troisième moyen de couplage ET (32) destiné à coupler le premier bit d'opérande auxiliaire (*x̅*) et le deuxième bit d'opérande auxiliaire (*y̅*), pour fournir un paramètre d'élimination (K); et
un quatrième moyen de couplage ET destiné à coupler le premier bit d'opérande utile (x) et le deuxième bit d'opérande utile (y), pour générer un paramètre de génération (G).

5. Dispositif selon l'une des revendications précédentes, dans lequel le circuit logique (12) présente les caractéristiques suivantes:
un moyen destiné au couplage logique des deux bits d'opérande utiles et des deux bits d'opérande auxiliaires de sorte que, en mode de données, les trois opérandes de sortie soient calculés selon une règle de couplage prédéterminée.

6. Dispositif selon la revendication 1, dans lequel l'étage de maintien de "0" est réalisé de manière à maintenir, en réaction à un état "0" valide d'un opérande de sortie, cet état "0" indépendamment des entrées présentes au circuit logique (12).

7. Dispositif selon l'une des revendications précédentes,
dans lequel le circuit logique (12) présente par ailleurs un moyen de préparation (42) qui est réalisé de manière à placer, en mode de préparation, les trois opérandes de sortie indépendamment d'une sortie d'un moyen logique pour le couplage logique des données d'entrée à la même valeur, et
le circuit logique étant par ailleurs réalisé de manière à éliminer, en mode de préparation, un courant transversal d'un point à haut potentiel de tension (Vdd) à un potentiel de référence (Vss).

8. Dispositif selon la revendication 1, dans lequel l'étage logique (41) est réalisé de manière à ne comporter que des transistors NMOS.

9. Dispositif selon la revendication 1 ou 8, dans lequel l'étage logique présente les caractéristiques suivantes:
un premier transistor (520) et un deuxième transistor (522), le premier transistor (520) pouvant être commandé par le deuxième bit d'opérande utile (y), et le deuxième transistor pouvant être commandé par le premier bit d'opérande utile (x), le premier transistor (520) et le deuxième transistor (522) étant connectés en série, à une entrée des deux transistors étant présent un potentiel de référence, et à une sortie (518) des deux transistors (520, 522) étant obtenu un paramètre de génération complémentaire (*G̅*);
un troisième transistor (524) et un quatrième transistor (526), le troisième transistor (524) et le quatrième transistor (526) étant connectés en série, l'un des transistors étant relié à un potentiel de référence (Vss), à une sortie (516) de l'autre transistor (526) pouvant être obtenu un paramètre d'élimination inversé (*K̅*), le troisième transistor (524) pouvant être commandé par le deuxième bit d'opérande auxiliaire (*y̅*), et le quatrième transistor (526) pouvant être commandé par le premier bit d'opérande auxiliaire (*x̅*);
un cinquième transistor (528) qui est connecté en série avec le troisième transistor (524), le cinquième transistor (528) pouvant fournir, à une sortie (514) de ce dernier, un paramètre de propagation inversé (*P̅*), le cinquième transistor pouvant être commandé par le premier bit d'opérande utile, par ailleurs étant prévu un sixième transistor (530) qui peut être commandé par le premier bit d'opérande auxiliaire (*x̅*), dont la sortie est identique à la sortie (514) du cinquième transistor (528) et qui est connecté en série avec le premier transistor.

10. Dispositif selon l'une des revendications 1 à 9, dans lequel les bits d'opérande utiles et les bits d'opérande auxiliaires se trouvent, en mode de préparation, à un état de faible tension, une opération de prédécharge étant effectuée, en mode de préparation, pour les bits d'opérande utiles et les bits d'opérande auxiliaires.

11. Dispositif selon l'une des revendications 1 à 10, dans lequel l'étage de précharge (42) et l'étage de maintien de "1" (43) présentent uniquement des transistors PMOS.

12. Dispositif selon la revendication 1, dans lequel le transistor de verrouillage est réalisé sous forme de transistor NMOS.

13. Dispositif selon la revendication 12, dans lequel le transistor de verrouillage peut, en mode de données, être réglé à un faible potentiel de référence (Vss) et peut, en mode de préparation, tout d'abord être connecté à un haut potentiel (Vdd) et ensuite à nouveau au faible potentiel (Vss).

14. Dispositif selon l'une des revendications 1 à 13, dans lequel l'étage logique (41) est réalisé de manière à ne pas soumettre, en mode de préparation dans lequel les bits d'opérande utiles et les bits d'opérande auxiliaires ont le même état, des noeuds de paramètre de sortie (514, 516, 518) à un potentiel de référence défini.

15. Dispositif selon l'une des revendications 1 à 14, dans lequel le moyen de commande (10) est réalisé de manière à maintenir le signal de verrouillage (550), en mode de données, à un état bas,
à maintenir le signal de précharge (554), en mode de données, à un état haut (63), à amener, en mode de préparation, le signal de verrouillage (550) à un état haut (67), à amener alors le signal de verrouillage à nouveau à un état bas (61), et à amener, uniquement après que le signal de verrouillage ait été amené à un état bas, le signal de précharge (554) à un état bas, pour effectuer une opération de précharge.

16. Procédé pour convertir une entrée à double rail présentant deux bits d'opérande utiles (x, y) et deux bits d'opérande auxiliaires (*x̅,y̅*) en une sortie à trois opérandes de sortie (P, K, G), les bits d'opérande auxiliaires étant, dans un mode de données, complémentaires aux deux bits d'opérande utiles, aux étapes suivantes consistant à:
faire fonctionner (10) le dispositif en alternance en un mode de données, en un mode de préparation qui suit le mode de données, et à nouveau en un mode de données; et
coupler (12) les deux bits d'opérande utiles et les deux bits d'opérande auxiliaires à un circuit logique, de sorte que, en mode de données, deux opérandes de sortie parmi les trois opérandes de sortie aient une autre valeur qu'un troisième opérande de sortie parmi les trois opérandes de sortie, et
assurer (62) que, en mode de préparation, les trois opérandes de sortie aient la même valeur,
le circuit logique (12) réalisant les étapes suivantes consistant à:
coupler de manière logique les bits d'opérande utiles et les bits d'opérande d'entrée selon une règle de couplage par un étage logique (41);
amener les opérandes de sortie dans le même état en mode de préparation par un étage de précharge (42);
le procédé est **caractérisé par le fait que** le circuit logique réalise les autres étapes suivantes consistant à:
maintenir deux opérandes de sortie dans un état identique en réaction à un état complémentaire à l'état identique du troisième opérande de sortie par un étage de maintien de "1" (43); et
maintenir le troisième opérande de sortie à l'état complémentaire par un étage de maintien de "0" (44), l'étage de maintien de "0" présentant un inverseur (541, 542, 543), un branchement de couplage rétroactif (544, 545, 546) et un transistor de blocage (547, 548, 549), une entrée du transistor de blocage pouvant être reliée à un signal de blocage (550), une sortie du transistor de blocage pouvant être reliée à une entrée d'un inverseur respectif, et une entrée de commande du transistor de blocage étant reliée au branchement de couplage rétroactif.
